# EUROPEAN PATENT APPLICATION

(11) **EP 4 534 899 A1**
(43) Date of publication of application: **09.04.2025**
(21) Application number: 23811865.7
(22) Date of filing: 25.05.2023
(51) Int. Cl.: F21V 29/502, F21S 2/00, F21V 3/02, F21V 3/08, F21V 29/77, G02B 5/20, G03B 21/00, G03B 21/14, G03B 21/16, F21Y 115/10, F21Y 115/30

(54) **PHOSPHOR WHEEL AND LIGHT EMITTING DEVICE**

(30) Priority: 27.05.2022 JP 2022086904
(71) Applicant: PANASONIC INTELLECTUAL PROPERTY MANAGEMENT CO., LTD., Kadoma-shi Osaka 571-0057 (JP)
(72) Inventor: IIZAWA, Noboru, Kadoma-shi, Osaka 571-0057 (JP); HONDA, Yosuke, Kadoma-shi, Osaka 571-0057 (JP); NAKASHIMA, Noriyasu, Kadoma-shi, Osaka 571-0057 (JP); TAKAHIRA, Yoshiyuki, Kadoma-shi, Osaka 571-0057 (JP); MURAGAKI, Yoshihiro, Kadoma-shi, Osaka 571-0057 (JP); ASAYAMA, Kaito, Kadoma-shi, Osaka 571-0057 (JP)
(74) Representative: Müller-Boré & Partner Patentanwälte PartG mbB
(86) International application number: PCT/JP2023/019432
(87) International publication number: WO 2023/228993

(57) **Abstract**

A phosphor wheel (1B) that is transmissive, and includes: a fluorescent substrate (10B) that consists essentially of a fluorescent material; a metal member (20B) bonded to a principal surface that the fluorescent substrate (10B) includes, the metal member (20B) including a plurality of first radiator fins (202) that protrude in a direction away from the principal surface; and a rotator (30B) that rotates the fluorescent substrate (10B) and the metal member (20B) about an axis extending in a thickness direction of the fluorescent substrate (10B). In the phosphor wheel (1B), in a plan view of the fluorescent substrate (10B), the fluorescent substrate (10B) includes an annular ring-shaped region (A11) that does not overlap the metal member (20B), and in a plan view of the metal member (20B), an opening (206) is provided between the plurality of first radiator fins (202) of the metal member (20B).

## Description

### [Technical Field]

The present invention relates to a phosphor wheel and a light emitting device.

### [Background Art]

A conventional transmissive fluorescence emitting module (phosphor wheel) that generates fluorescence by being excited by excitation light has been known. A transmissive fluorescence emitting module is applied to a light emitting device such as a projector, for example.

Patent Literature (PTL) 1 discloses a light source device as an example of a transmissive fluorescence emitting module. This light source device (the transmissive fluorescence emitting module) includes a substrate for fluorescence formed of a plate-shaped glass member, a fluorescence generator, a dichroic film located between the substrate for fluorescence and the fluorescence emitter, and a light emitter that emits excitation light that excites the fluorescence generator.

### [Citation List]

### [Patent Literature]

[PTL 1] Japanese Unexamined Patent Application Publication No. 2012-9242

### [Summary of Invention]

### [Technical Problem]

By the way, it is known that when the temperature of the fluorescence generator is increased by being irradiated with excitation light, a phenomenon in which less fluorescence is generated (a so-called thermal quenching phenomenon) occurs. For example, with the transmissive fluorescence emitting module disclosed in PTL 1, a thermal quenching phenomenon readily occurs due to insufficient heat dissipation of the fluorescence generator, and as a result, the fluorescence emitter emits less fluorescence. Accordingly, efficiency of light usage achieved by such a transmissive fluorescence emitting module may be low.

In view of this, the present invention provides a phosphor wheel and a light emitting device that achieve high efficiency of light usage.

### [Solution to Problem]

A phosphor wheel according to an aspect of the present invention is a phosphor wheel that is transmissive, and includes: a fluorescent substrate that consists essentially of a fluorescent material; a metal member bonded to a principal surface that the fluorescent substrate includes, the metal member including a plurality of first radiator fins that protrude in a direction away from the principal surface; and a rotator that rotates the fluorescent substrate and the metal member about an axis extending in a thickness direction of the fluorescent substrate. In the phosphor wheel, in a plan view of the fluorescent substrate, the fluorescent substrate includes a region that does not overlap the metal member, the region being annular ring-shaped, and in a plan view of the metal member, an opening is provided between the plurality of first radiator fins of the metal member.

### [Advantageous Effects of Invention]

According to the present invention, a phosphor wheel and a light emitting device that achieve high efficiency of light usage can be provided.

### [Brief Description of Drawings]

[FIG. 1A]

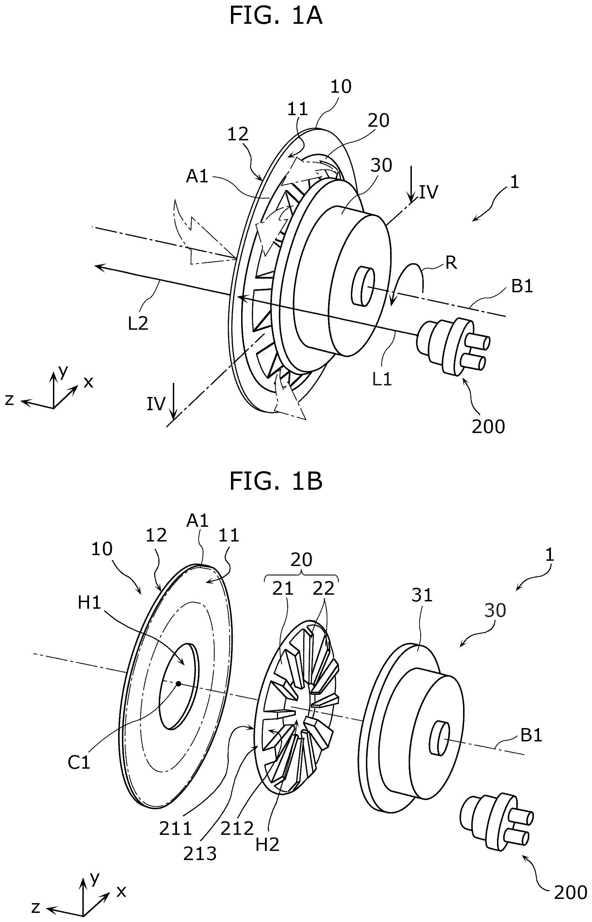

   FIG. 1A is a perspective view of a transmissive fluorescence emitting module according to Embodiment 1.
[FIG. 1B]
   FIG. 1B is an exploded perspective view of the transmissive fluorescence emitting module according to Embodiment 1.
[FIG. 2]

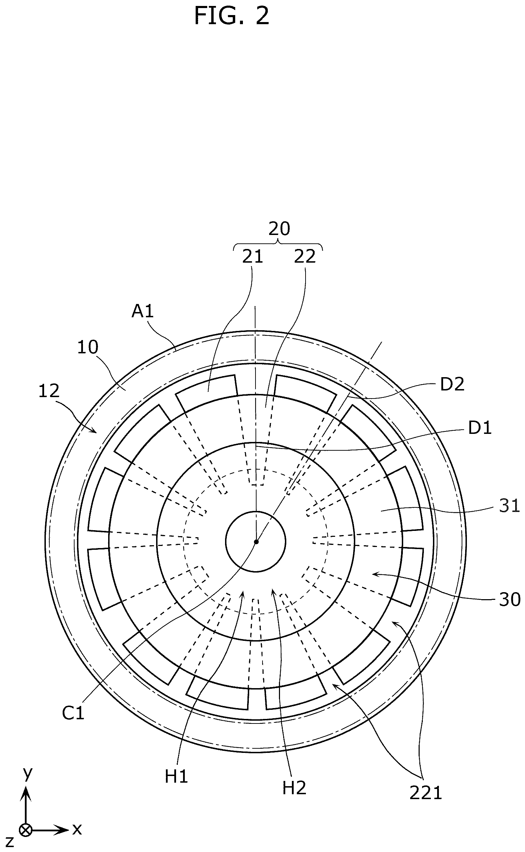

   FIG. 2 is a plan view of a fluorescent substrate, a metal member, and a rotator according to Embodiment 1.
[FIG. 3]

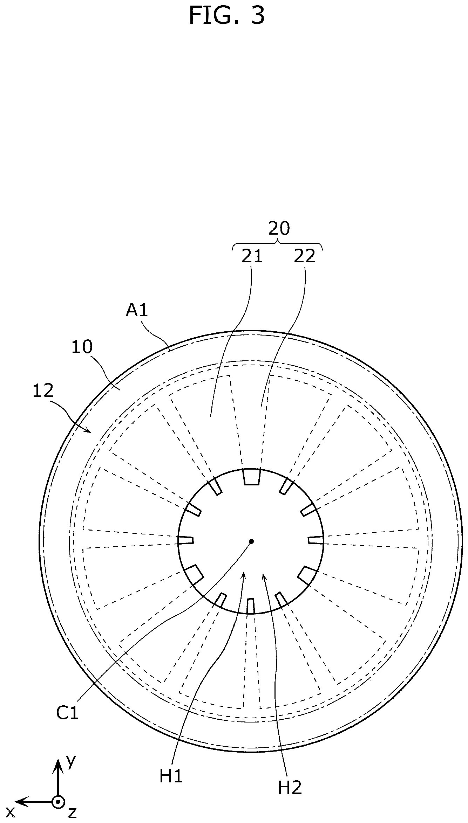

   FIG. 3 is a bottom view of the fluorescent substrate and the metal member according to Embodiment 1.
[FIG. 4]

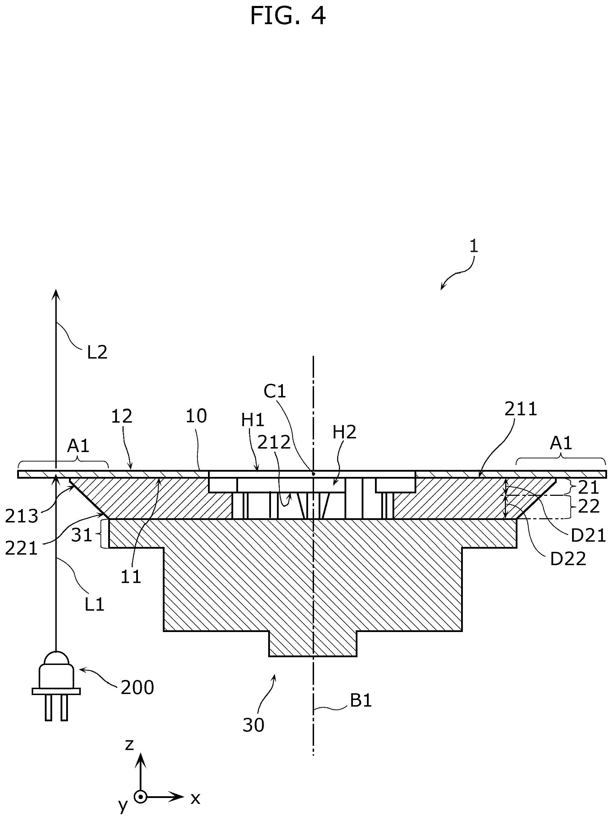

   FIG. 4 is a cross sectional view illustrating a cut surface of a portion of the transmissive fluorescence emitting module, which is taken along line IV-IV in FIG. 1A.
[FIG. 5]

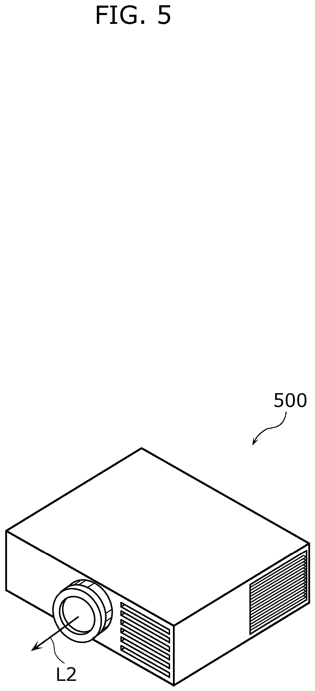

   FIG. 5 is a perspective view illustrating an appearance of a projector according to Embodiment 1.
[FIG. 6]

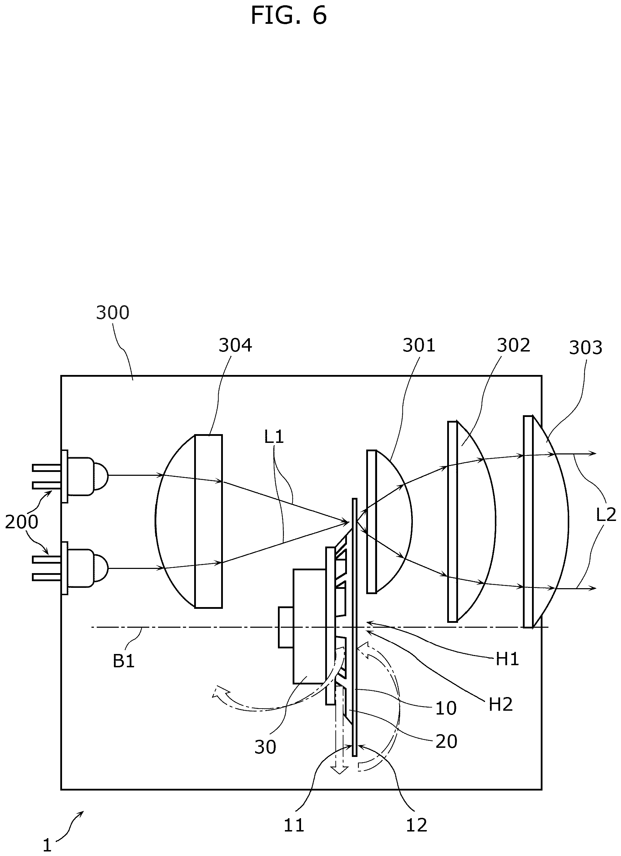

   FIG. 6 is a schematic diagram illustrating the transmissive fluorescence emitting module in the projector according to Embodiment 1.
[FIG. 7]

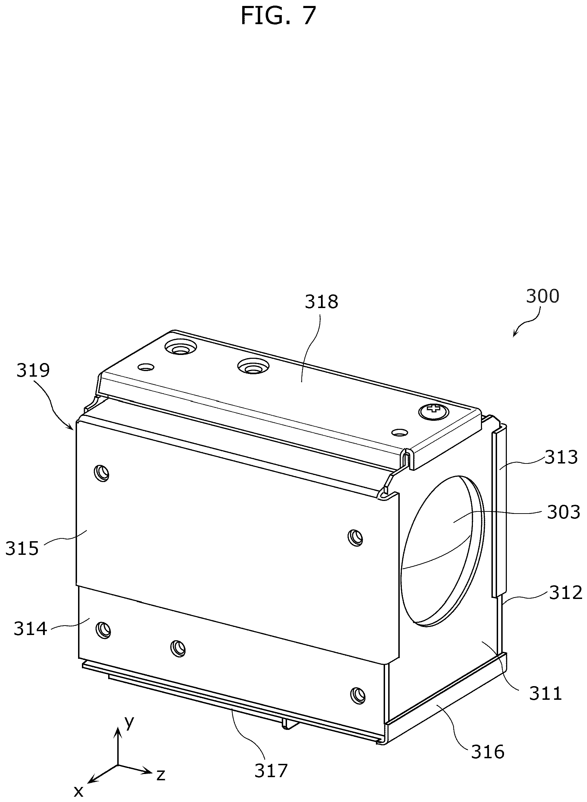

   FIG. 7 is a perspective view illustrating a casing according to Embodiment 1.
[FIG. 8]

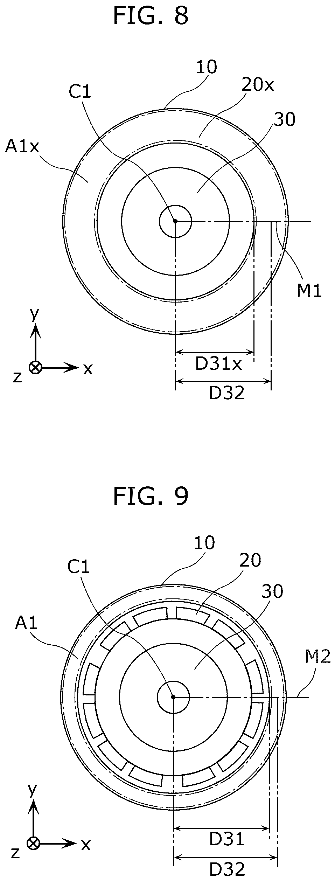

   FIG. 8 is a plan view of a fluorescent substrate, a metal member, and a rotator that are included in a transmissive fluorescence emitting module according to an example to be considered.
[FIG. 9]
   FIG. 9 is a plan view of the fluorescent substrate, the metal member, and the rotator according to Embodiment 1.
[FIG. 10]

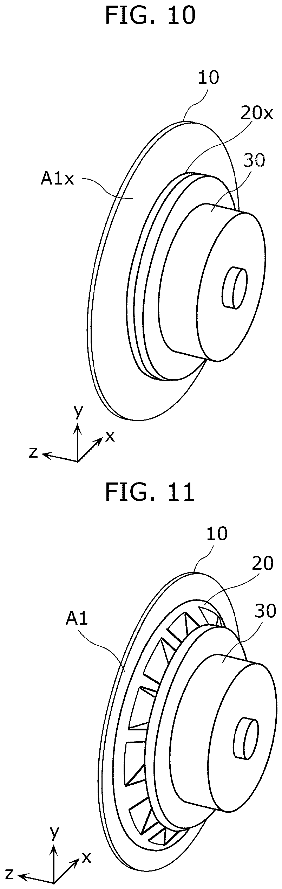

   FIG. 10 is a plan view of the fluorescent substrate, the metal member, and the rotator that are included in the transmissive fluorescence emitting module according to the example to be considered.
[FIG. 11]
   FIG. 11 is a perspective view of the fluorescent substrate, the metal member, and the rotator according to Embodiment 1.
[FIG. 12]

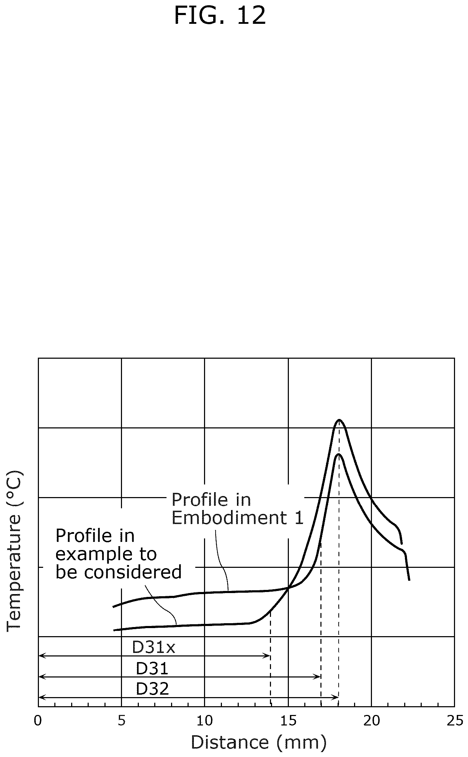

   FIG. 12 illustrates temperature profiles of the fluorescent substrates according to the example to be considered and Embodiment 1.
[FIG. 13A]

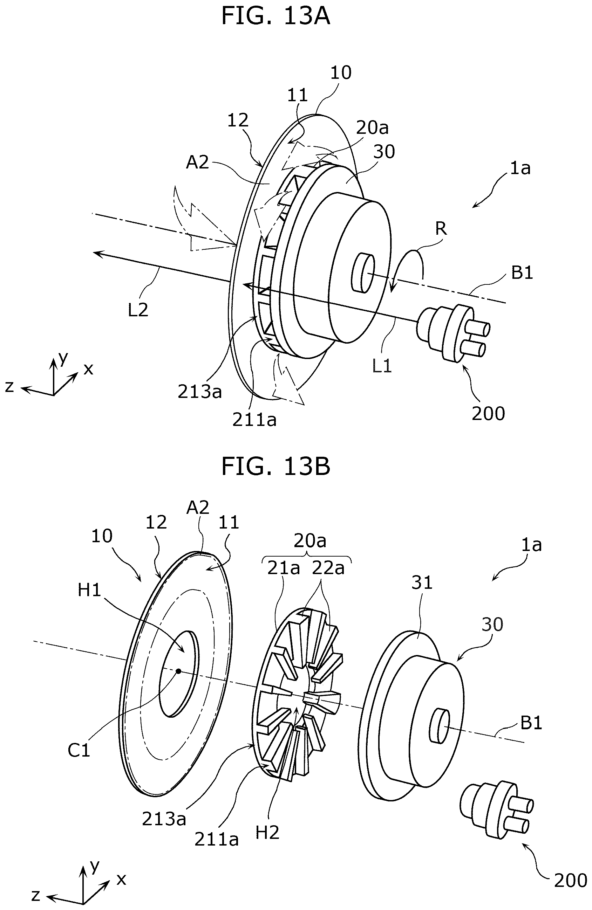

   FIG. 13A is a perspective view of a transmissive fluorescence emitting module according to Variation 1 of Embodiment 1.
[FIG. 13B]
   FIG. 13B is an exploded perspective view of the transmissive fluorescence emitting module according to Variation 1 of Embodiment 1.
[FIG. 14]

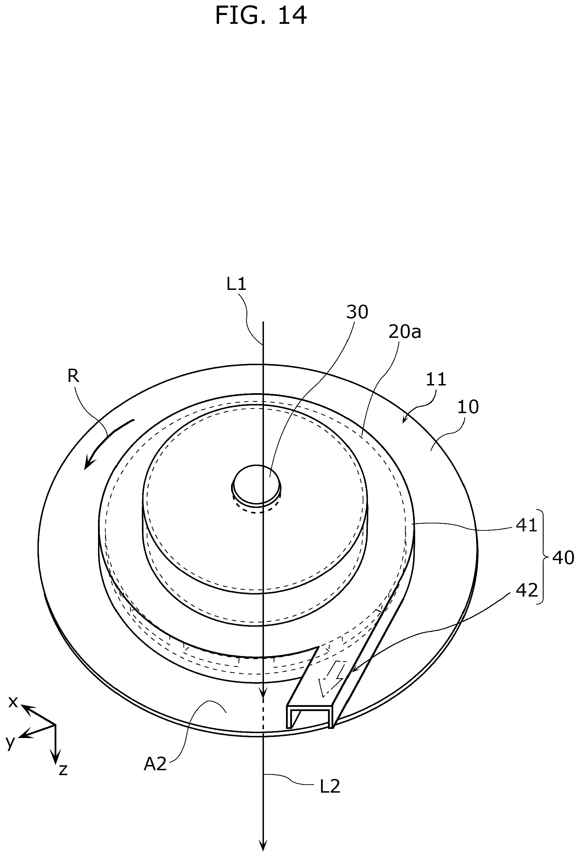

   FIG. 14 is a perspective view of a transmissive fluorescence emitting module according to Variation 2 of Embodiment 1.
[FIG. 15]

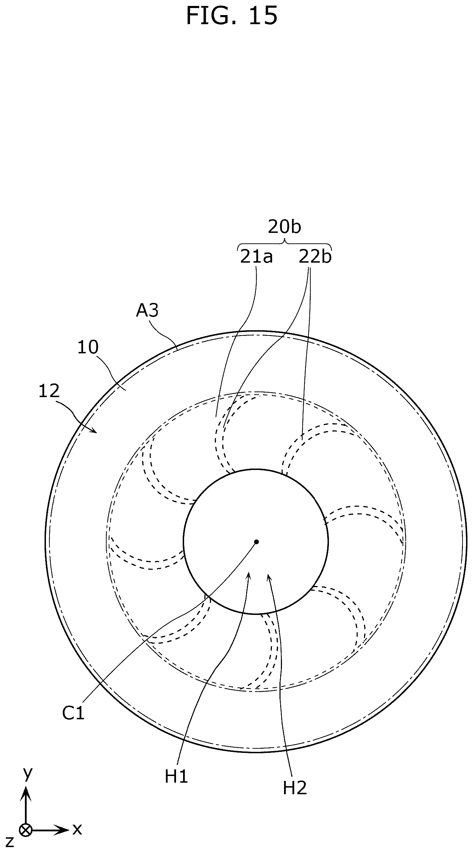

   FIG. 15 is a bottom view of a fluorescent substrate and a metal member according to Variation 3 of Embodiment 1.
[FIG. 16]

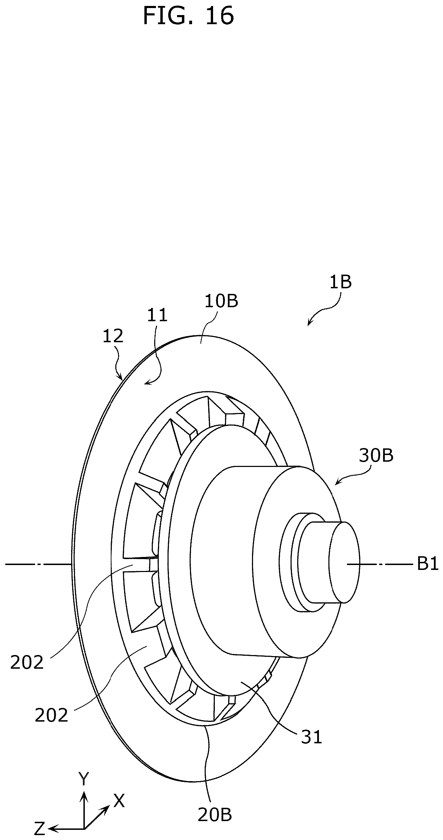

   FIG. 16 is a perspective view of a phosphor wheel according to Embodiment 2.
[FIG. 17]

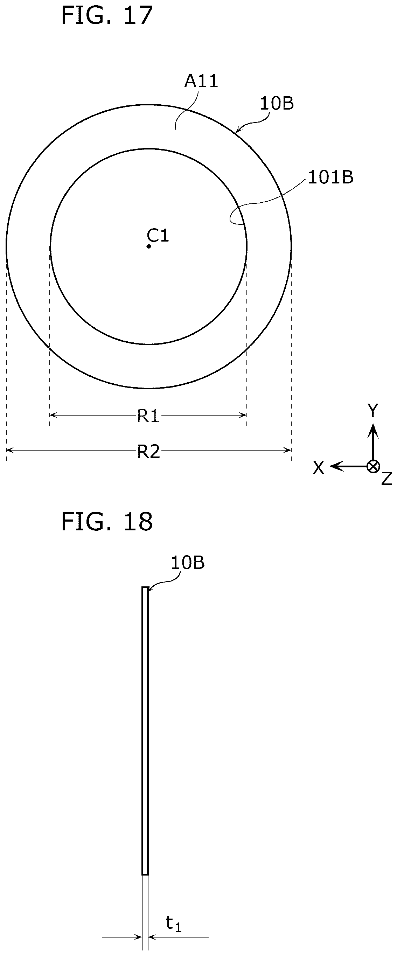

   FIG. 17 is a front view of a fluorescent substrate according to Embodiment 2.
[FIG. 18]
   FIG. 18 is a side view of the fluorescent substrate illustrated in FIG. 17.
[FIG. 19]

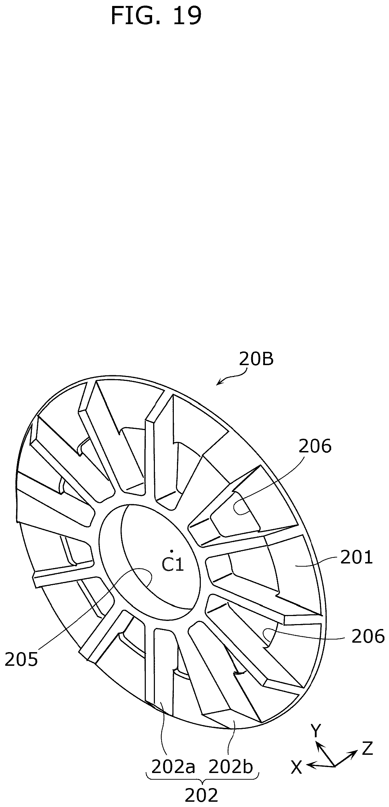

   FIG. 19 is a perspective view of a metal member viewed from a z-axis negative side according to Embodiment 2.
[FIG. 20]

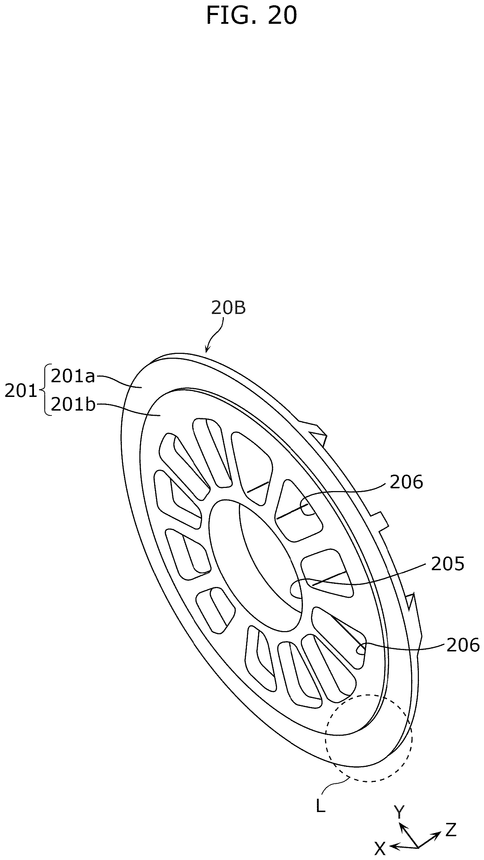

   FIG. 20 is a perspective view of the metal member viewed from a z-axis positive side according to Embodiment 2.
[FIG. 21]

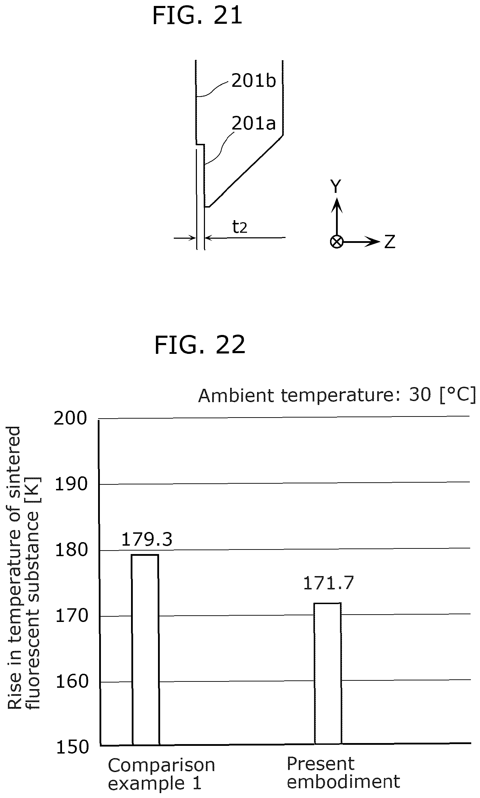

   FIG. 21 is a partially enlarged side view of the metal member of FIG. 20.
[FIG. 22]
   FIG. 22 is a diagram illustrating the result of verification performed on the actual prototype of the phosphor wheel according to Embodiment 2.
[FIG. 23A]

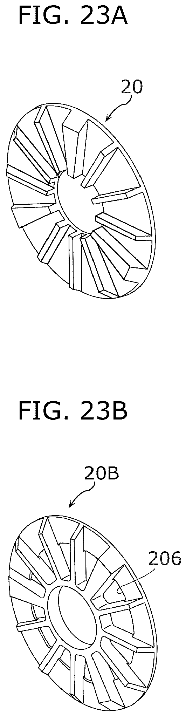

   FIG. 23A is a diagram illustrating a metal member used in an actual prototype according to Comparison example 1.
[FIG. 23B]
   FIG. 23B is a diagram illustrating a metal member used in an actual prototype according to Embodiment 2.
[FIG. 24]

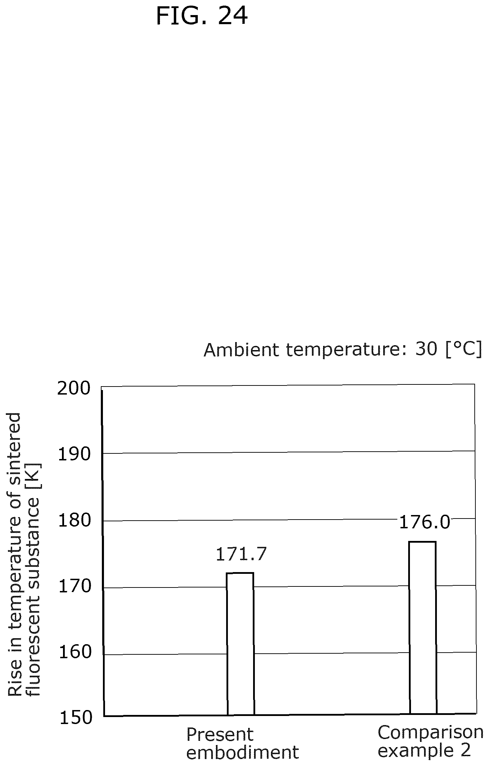

   FIG. 24 is a diagram illustrating the other result of verification performed on the actual prototype of the phosphor wheel according to Embodiment 2.
[FIG. 25]

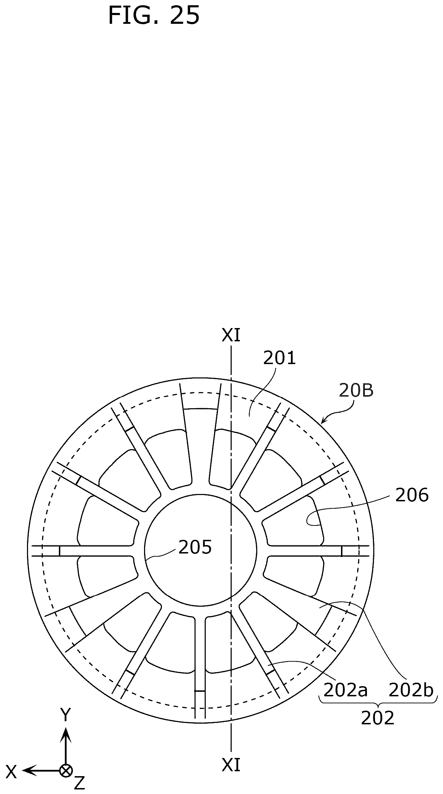

   FIG. 25 is a diagram illustrating a cut surface used in the analysis of the metal member according to Embodiment 2.
[FIG. 26]

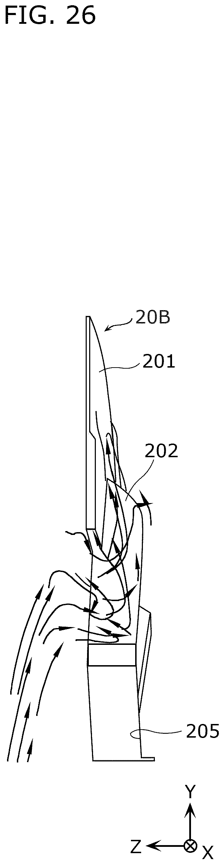

   FIG. 26 is a diagram illustrating the result of analysis of a fluid flow in proximity to the opening of the metal member according to Embodiment 2.
[FIG. 27]

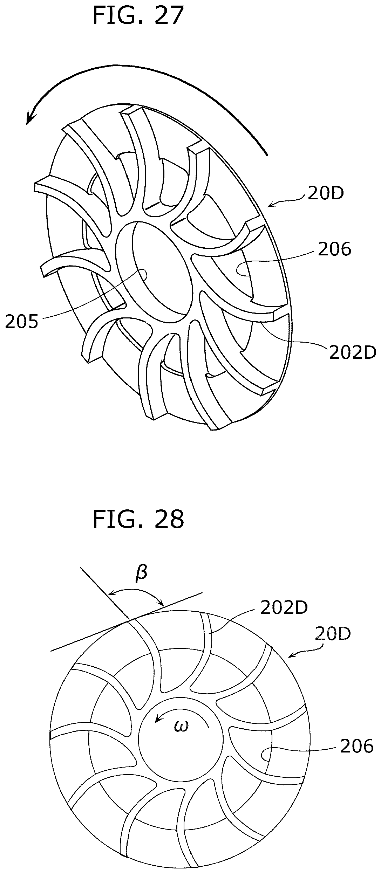

   FIG. 27 is a perspective view of the metal member viewed from a z-axis negative side according to a variation of Embodiment 2.
[FIG. 28]
   FIG. 28 is a diagram for explaining the conditions of the shape of a first radiator fin illustrated in FIG. 27.
[FIG. 29]

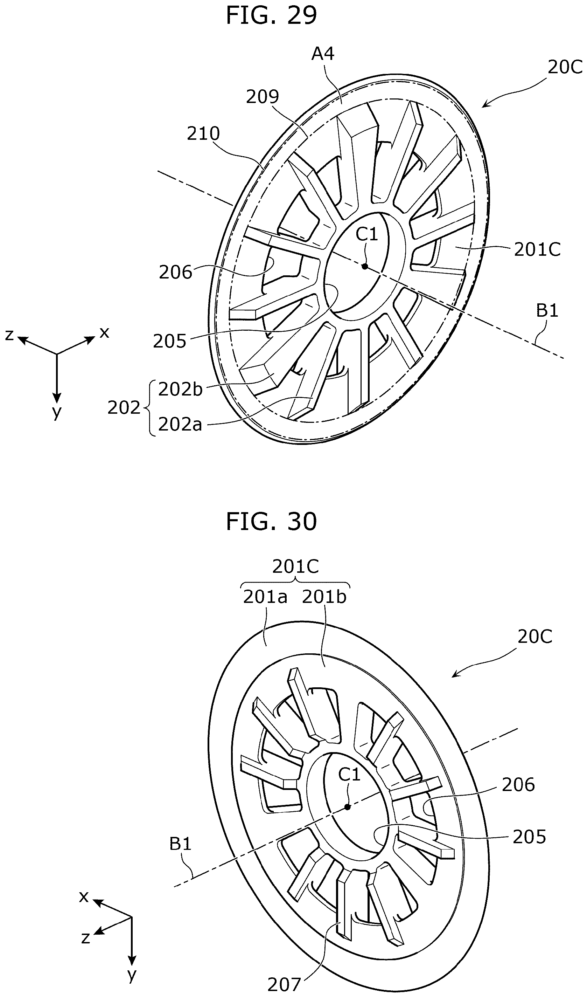

   FIG. 29 is a perspective view of a metal member viewed from a z-axis negative side according to Embodiment 3.
[FIG. 30]
   FIG. 30 is a perspective view of the metal member viewed from a z-axis positive side according to Embodiment 3.
[FIG. 31]

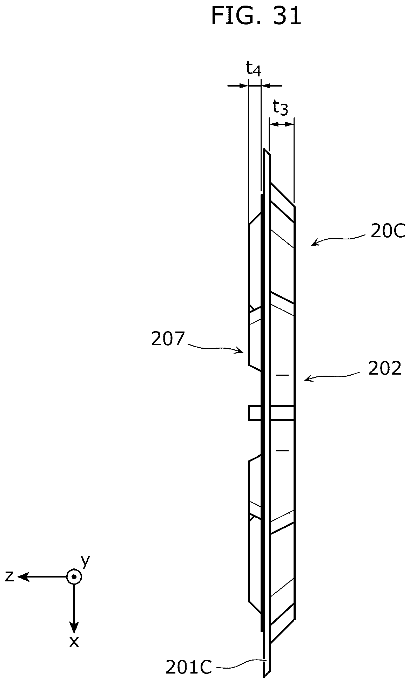

   FIG. 31 is a diagram of a side view of the metal member according to Embodiment 3.

### [Description of Embodiments]

The following describes in detail a transmissive fluorescence emitting module, for instance, according to embodiments of the present invention, with reference to the drawings.

Note that the embodiments described below each show a general or specific example. The numerical values, shapes, materials, structural components, the arrangement and connection of the structural components, manufacturing processes, and the processing order of the manufacturing processes, for instance, described in the following embodiments are examples, and thus are not intended to limit the present invention.

In addition, the drawings are schematic diagrams, and do not necessarily provide strictly accurate illustration. Accordingly, scaling, for example, is not necessarily consistent throughout the drawings. In the drawings, the same reference sign is given to substantially the same configuration, and a redundant description thereof is omitted or simplified.

In the Specification, a term that indicates a relation between structural components such as parallel or orthogonal, a term that indicates the shape of an element such as circular, and a numerical range do not necessarily have only strict meanings, and also cover substantially equivalent ranges that include a difference of about several percent, for example.

In the Specification and the drawings, the x axis, the y axis, and the z axis represent three axes of a three-dimensional orthogonal coordinate system. In the embodiments, two axes parallel to a third principal surface that a fluorescent substrate includes are referred to as an x axis and a y axis, and an axis orthogonal to the x axis and the y axis is referred to as a z axis.

### [Embodiment 1]

### Configuration

First, a configuration of transmissive fluorescence emitting module 1 according to the present embodiment is to be described with reference to the drawings. FIG. 1A is a perspective view of transmissive fluorescence emitting module 1 according to the present embodiment. FIG. 1B is an exploded perspective view of transmissive fluorescence emitting module 1 according to the present embodiment.

As illustrated in FIG. 1A and FIG. 1B, transmissive fluorescence emitting module 1 includes fluorescent substrate 10 including a fluorescent material, metal member 20, rotator 30, and two light emitters 200. Note that FIG. 1A and FIG. 1B illustrate one light emitter 200 for convenience. One light emitter 200 is similarly illustrated in some of the drawings described below. Transmissive fluorescence emitting module 1 may include single light emitter 200. Transmissive fluorescence emitting module 1 is used in a light emitting device typified by a projector and an illumination device, as an example. In the present embodiment, transmissive fluorescence emitting module 1 is used in a projector.

In the present embodiment, rotator 30 rotates fluorescent substrate 10, for instance, about axis B1 in the direction of arrow R illustrated in FIG. 1A and furthermore, fluorescent substrate 10 emits transmitted light L2 that includes fluorescence by receiving excitation light L1. Transmissive fluorescence emitting module 1 is a light-transmissive module that uses transmitted light L2 as projection light that the projector outputs. Thus, fluorescent substrate 10 is used as a light-transmissive phosphor wheel.

The following describes structural components included in transmissive fluorescence emitting module 1.

First, light emitter 200 is to be described.

Light emitter 200 is a light source that emits excitation light L1. Excitation light L1 excites a fluorescent material included in fluorescent substrate 10. Light emitter 200 is, for example, a semiconductor laser light source or a light emitting diode (LED) light source, and emits excitation light L1 having a predetermined color (wavelength) by being driven by a driving current.

In the present embodiment, light emitters 200 are semiconductor laser light sources. Note that semiconductor laser elements included in light emitters 200 are GaN-based semiconductor laser elements (laser chips) consisting essentially of a nitride semiconductor material, for example. In the present embodiment, light emitters 200 that are semiconductor laser light sources are collimator lens integrated light emitting devices of a TO-CAN type. Note that light emitters 200 may be multi-chip lasers as disclosed in Japanese Unexamined Patent Application Publication No. 2016-219779 or may each include a collimator lens and a TO-CAN separately.

As an example, light emitters 200 each emit, as excitation light L1, a laser beam in a range from near ultra violet light to blue light, which has a peak wavelength in a range from 380 nm to 490 nm. At this time, excitation light L1 has a peak wavelength of 455 nm, for example, and is blue light.

Next, fluorescent substrate 10 is to be described.

Fluorescent substrate 10 is a plate-shaped substrate that includes two principal surfaces on opposite sides from each other. The two principal surfaces are third principal surface 11 and fourth principal surface 12. Here, third principal surface 11 and fourth principal surface 12 are flat.

Furthermore, fluorescent substrate 10 is to be described in detail, with reference to FIG. 2 and FIG. 3.

FIG. 2 is a plan view of fluorescent substrate 10, metal member 20, and rotator 30 according to the present embodiment. In FIG. 2, light emitters 200 are omitted. FIG. 3 is a bottom view of fluorescent substrate 10 and metal member 20 according to the present embodiment. In FIG. 3, rotator 30 and light emitters 200 are omitted Note that a view of transmissive fluorescence emitting module 1 in the negative z-axis direction is a plan view, whereas a view of transmissive fluorescence emitting module 1 in the positive z-axis direction is a bottom view. The plan view is a view from the top, and the bottom view is a view from the underside.

Fluorescent substrate 10 is circularly shaped in the plan view, and thus has a circular plate shape. Here, the center of the circular shape that fluorescent substrate 10 has is center point C1. Furthermore, fluorescent substrate 10 has first through-hole H1, and thus has an annular ring shape, more specifically. First through-hole H1 is a hole penetrating through fluorescent substrate 10 in the thickness direction of fluorescent substrate 10 (the z-axis direction), and has a circular shape in the plan view. The center of the circular shape that first through-hole H1 has overlaps center point C1. Thus, fluorescent substrate 10 is provided in a circular ring shape on a circumference equally distant from center point C1 of fluorescent substrate 10, and in a belt shape along the circumferential direction in the plan view.

The outside diameter (that is, the diameter of an outer circle in the bottom view in FIG. 3) of fluorescent substrate 10 having an annular ring shape is preferably in a range from 30 mm to 90 mm, more preferably in a range from 35 mm to 70 mm, and yet more preferably in a range from 40 mm to 50 mm, but the outside diameter is not limited to these examples. When transmissive fluorescence emitting module 1 is applied to a projector, the outside diameter of fluorescent substrate 10 is determined to allow fluorescent substrate 10 to fit in the casing of the projector.

Further, the inside diameter (that is, the diameter of the inner circle in the bottom view in FIG. 3) of fluorescent substrate 10 is smaller than the outside diameter of fluorescent substrate 10, and is preferably in a range from 15 mm to 45 mm, more preferably in a range from 17.5 mm to 35 mm, and yet more preferably in a range from 20 mm to 25 mm, as an example, but the inside diameter is not limited to these examples. The inside diameter of fluorescent substrate 10 is the diameter of first through-hole H1.

The thickness of fluorescent substrate 10 (that is, the length thereof in the z-axis direction) may be in a range from 50 µm to 700 µm. The thickness of fluorescent substrate 10 is preferably in a range from 80 µm to 500 µm, and more preferably in a range from 100 µm to 300 µm.

Fluorescent substrate 10 includes a fluorescent material. Stated differently, fluorescent substrate 10 is a member made of a fluorescent material that is a principal component. More specifically, fluorescent substrate 10 is a substrate that consists essentially of a sintered fluorescent substance made of a fluorescent material.

Note that here, a sintered fluorescent substance in this Specification is to be described.

A sintered fluorescent substance is a baked body obtained by baking raw-material powder of the above fluorescent material that is a principal component (an example of which is a granulated body obtained by granulating raw-material power of the fluorescent material) at a temperature lower than the melting point of the fluorescent material. During the baking process, raw-material powder particles of the sintered fluorescent substance are bonded. Accordingly, the sintered fluorescent substance requires almost no binder for bonding granulated bodies. More specifically, the sintered fluorescent substance does not need a binder at all. An example of a binder is a transparent resin in PTL 1 stated above. Further, a known material such as an Al₂O₃ material or a glass material (that is, SiO_{d} (0<d≤2)) is used for the binder. Note that similarly, not just the binder, the sintered fluorescent substance needs almost no material (hereinafter, another material) other than a fluorescent material included in the sintered fluorescent substance, or more specifically, does not require none of such another material.

For example, when the entire volume of the sintered fluorescent substance is considered to be 100 vol%, the volume of the fluorescent material may occupy 70 vol% or more of the entire volume of the sintered fluorescent substance. Further, the volume of the fluorescent material occupies preferably 80 vol% or more, more preferably 90 vol% or more, or yet more preferably 95 vol% or more of the entire volume of the sintered fluorescent substance.

Note that stated differently, when the entire volume of the sintered fluorescent substance is considered to be 100 vol%, the volume of another material (for example, a binder) may occupy less than 30 vol% of the entire volume of the sintered fluorescent substance. Further, the volume of another material (for example, a binder) occupies preferably 20 vol% or less, more preferably 10 vol% or less, or yet more preferably 5 vol% or less of the entire volume of the sintered fluorescent substance.

If the volume percent of another material in the entire volume of the sintered fluorescent substance is high (or in other words, the proportion of the volume of another material is high), phonon scattering occurs due to a defect present at the interface between the fluorescent material and another material. As a result, thermal conductivity of the sintered fluorescent substance decreases. In particular, if the volume of another material occupies 30 vol% or more, thermal conductivity significantly decreases. Further, more non-radiative recombination occurs at the interface, and efficiency of light emission decreases. In other words, the lower the volume percent of another material (or in other words, the proportion of the volume of another material) in the entire volume of the sintered fluorescent substance is, the higher the thermal conductivity and efficiency of light emission become. The sintered fluorescent substance according to the present invention includes another material, the volume of which is less than 30 vol% in the entire volume of the sintered fluorescent substance.

Here, a fluorescent material is to be described.

The fluorescent material consists essentially of a crystalline phase having a garnet structure, for example. The garnet structure is a crystalline structure represented by the general formula A₃B₂C₃O₁₂. One or more rare earth elements such as Ca, Y, La, Ce, Pr, Nd, Sm, Eu, Gd, Tb, and Lu are used as element A, and one or more elements such as Mg, Al, Si, Ga, and Sc are used as element B, and one or more elements such as Al, Si, and Ga are used as element C. Examples of such a garnet structure include yttrium aluminum garnet (YAG), lutetium aluminum garnet (LuAG), lutetium calcium magnesium silicon garnet (Lu₂CaMg₂Si₃O₁₂), and terbium aluminum garnet (TAG). In the present embodiment, the fluorescent material consists essentially of the crystalline phase represented by (Y₁₋ₓCeₓ)₃Al₂Al₃O₁₂ (that is, (Y₁₋ₓCeₓ)₃Al₅O₁₂) (0.0001≤x<0.1), stated differently, YAG.

When the fluorescent material consists essentially of YAG, there are cases where Al₂O₃ is used as the raw material. In this case, there are cases where Al₂O₃ remains as an unreacted raw material in the sintered fluorescent substance. However, Al₂O₃ that is an unreacted raw material is different from the binder described above. If the entire volume of the sintered fluorescent substance is considered to be 100 vol%, the volume of Al₂O₃ that is an unreacted raw material in the entire volume of the sintered fluorescent substance is 5 vol% or less.

Note that the crystalline phase included in the fluorescent material may be a solid solution that includes a plurality of garnet crystalline phases having different chemical compositions. An example of such a solid solution is a solid solution ((1-a)(Y₁₋ₓCeₓ)₃Al₅O₁₂ • a(Lu_{1-y}Ce_{y})₃Al₂Al₃O₁₂ (0<a<1)) that includes a garnet crystalline phase represented by (Y₁₋ₓCeₓ)₃Al₂Al₃O₁₂ (0.001≤x<0.1) and a garnet crystalline phase represented by (Lu_{1-y}Ce_{y})₃Al₂Al₃O₁₂ (0.001≤y<0.1).

Further, an example of such a solid solution is a solid solution ((1-b)(Y₁₋ₓCeₓ)₃Al₂Al₃O₁₂ • b(Lu_{1-z}Ce_{z})₂CaMg₂Si₃O₁₂ (0<b<1)) that includes a garnet crystalline phase represented by (Y₁₋ₓCeₓ)₃Al₂Al₃O₁₂ (0.001≤x<0.1) and a garnet crystalline phase represented by (Lu_{1-z}Ce_{z})₂CaMg₂Si₃O₁₂ (0.0015≤z<0.15). The fluorescent material consists essentially of a solid solution that includes a plurality of garnet crystalline phases having different chemical compositions, and thus the spectrum of fluorescence emitted by the fluorescent material is further increased and includes more green light components and more red light components. Accordingly, a projector that emits projection light having a wide color gamut can be provided.

The crystalline phases included in the fluorescent material may include a crystalline phase having a chemical composition that deviates from the crystalline phase represented by the above-stated general formula A₃B₂C₃O₁₂. An example of such a crystalline phase is (Y₁₋ₓCeₓ)₃Al_{2+δ}Al₃O₁₂ (where δ is a positive number) that includes richer Al than the crystalline phase represented by (Y₁₋ₓCeₓ)₃Al₂Al₃O₁₂ (0.001≤x<0.1). Further, another example of such a crystalline phase is (Y₁₋ₓCeₓ)_{3+ζ}Al₂Al₃O₁₂ (where ζ is a positive number) that includes richer Y than the crystalline phase represented by (Y₁₋ₓCeₓ)₃A|₂Al₃O₁₂ (0.001≤x<0.1). Such crystalline phases have chemical compositions that deviate from the crystalline phase represented by the general formula A₃B₂C₃O₁₂, but maintain the garnet structure.

Furthermore, the crystalline phases included in the fluorescent material may include a different crystalline phase having a structure other than the garnet structure.

Fluorescent substrate 10 includes region A1 that is annular ring-shaped and does not overlap metal member 20 in the plan view. In FIG. 1B, FIG. 2, and FIG. 3, region A1 corresponds to a region between two circles indicated by the dash-dot lines. The center of the annular ring shape that is the shape of region A1 overlaps center point C1 of fluorescent substrate 10. Excitation light L1 enters region A1. More specifically, excitation light L1 emitted from light emitters 200 enters region A1 through third principal surface 11 (that is from the z-axis negative side).

In region A1 that fluorescent substrate 10 includes, the fluorescent material that consists essentially of YAG receives excitation light L1 and emits fluorescence. More specifically, the fluorescent material is irradiated with excitation light L1, and thus emits fluorescence as wavelength-converted light. Hence, the wavelength-converted light emitted from the fluorescent material has a wavelength longer than the wavelength of excitation light L1.

In the present embodiment, wavelength-converted light emitted from the fluorescent material includes fluorescence that is yellow light. For example, the fluorescent material absorbs light having a wavelength in a range from 380 nm to 490 nm, and emits fluorescence that is yellow light and has a peak wavelength in a range from 490 nm to 580 nm. Since the fluorescent material consists essentially of YAG, the fluorescent material can readily emit fluorescence having a peak wavelength in a range from 490 nm to 580 nm.

In the present embodiment, as illustrated in FIG. 1A, the wavelength of a portion of excitation light L1 that has entered is converted by the fluorescent material, and the portion of excitation light L1 passes through fluorescent substrate 10 and exits through fourth principal surface 12. Further, the wavelength of another portion of excitation light L1 that has entered is not converted by the fluorescent material, and the other portion of excitation light L1 passes through fluorescent substrate 10 and exits through fourth principal surface 12. Transmitted light L2 passing through fluorescent substrate 10 includes fluorescence that is yellow light having a converted wavelength and excitation light L1 that is blue light having a wavelength not converted. Thus, transmitted light L2 is a combination of such light, and is while light.

Fluorescent substrate 10 does not need to be supported by another structural component. Thus, fluorescent substrate 10 has a rigid property. Since fluorescent substrate 10 includes a sintered fluorescent substance and has a thickness in the above range, fluorescent substrate 10 has a rigid property. As compared with the fluorescence generator formed with a coating material that includes a fluorescent substance and a transparent resin, which is disclosed in PTL 1, fluorescent substrate 10 according to the present embodiment is much more rigid.

Next, metal member 20 is to be described.

Metal member 20 is a structural component consisting essentially of a metal material. Metal member 20 is bonded to one principal surface of fluorescent substrate 10. In the present embodiment, as illustrated in FIG. 1A and FIG. 1B, metal member 20 is located on the z-axis negative side with respect to fluorescent substrate 10, and is bonded to third principal surface 11. As will be described in detail later, as the material of metal member 20, Al that is light and highly heat-conductive is used, taking into consideration a load onto rotator 30 that is a motor and thermal conductivity.

In the present embodiment, metal member 20 is bonded to third principal surface 11 of fluorescent substrate 10 with a bonding layer being provided therebetween. In this case, a silicone resin is used for the bonding layer, in order to reduce a difference between thermal expansion coefficients of rotator 30 and fluorescent substrate 10. Note that another material such as Cu or Fe may be used as the material of rotator 30, and an adhesive member may also be another epoxy resin or a highly heat-conductive adhesive that contains nano Ag or nano Cu. The thickness of the bonding layer is preferably in a range from 5 µm to 40 µm, and more preferably in a range from 10 µm to 20 µm. Note that a structure may be adopted in which metal member 20 is in a direct contact with third principal surface 11 of fluorescent substrate 10 without using an adhesive. In this case, fluorescent substrate 10 may be sandwiched between metal member 20 and another member (not illustrated), and the metal member and the other member may be bonded with a bolt or a screw, for instance. Note that in the case of such a sandwiching structure that does not use an adhesive, the other member may consist essentially of a metal in view of heat dissipation, but may consist essentially of a resin material.

Furthermore, metal member 20 according to the present embodiment includes main body 21 and a plurality of first radiator fins 22.

Main body 21 is a plate-shaped member provided, being stacked over fluorescent substrate 10. Main body 21 includes two principal surfaces on opposite sides from each other. The two principal surfaces are first principal surface 211 and second principal surface 212. First principal surface 211 and second principal surface 212 are planes parallel to each other, herein. In the present embodiment, main body 21 is bonded to third principal surface 11 of fluorescent substrate 10 with the bonding layer (not illustrated) being provided therebetween. More specifically, first principal surface 211 that main body 21 includes is bonded to third principal surface 11 of fluorescent substrate 10 with the bonding layer being provided therebetween. Since main body 21 has a plate shape, the area in which fluorescent substrate 10 and metal member 20 (here, main body 21) are bonded further increases. The plate shape that is the shape of main body 21 is not limited to a rectangular parallelepiped, and also means a cylindrical shape, a truncated cone shape, or the like.

As illustrated in FIG. 2 and FIG. 3, the shape of main body 21 is a circular shape in the plan view and the bottom view. The area of first principal surface 211 that main body 21 includes is greater than the area of second principal surface 212 that main body 21 includes. Thus, the shape of main body 21 is a truncated cone. Main body 21 that is truncated cone-shaped includes first side surface 213. First side surface 213 is a slanting surface that spreads from second principal surface 212 to first principal surface 211. First side surface 213 that is a slanting surface is not parallel to the z axis.

Second through-hole H2 is provided in main body 21, and thus the shape of main body 21 is a truncated cone shape provided with second through-hole H2. In the plan view and the bottom view, the shape of main body 21 is an annular ring shape. Second through-hole H2 is a hole penetrating through main body 21 in the thickness direction of fluorescent substrate 10 (the z-axis direction), and has a circular shape in the plan view. The center of the annular ring shape that is the shape of main body 21 overlaps center point C1 of fluorescent substrate 10.

The outside diameter of main body 21 is smaller than the outside diameter of fluorescent substrate 10. Note that here, the outside diameter of main body 21 means the diameter of first principal surface 211 of main body 21. The outside diameter of main body 21, for example, is preferably in a range from 20 mm to 70 mm, more preferably in a range from 25 mm to 55 mm, and yet more preferably in a range from 30 mm to 40 mm, but the outside diameter is not limited to these examples. Note that in the present embodiment, the outside diameter of main body 21 is 34 mm, and thus the radius of main body 21 is 17 mm.

It is sufficient if the inside diameter of main body 21 is smaller than the outside diameter of main body 21. The inside diameter of main body 21 is the same as the inside diameter of fluorescent substrate 10 herein, but is not limited to this example. The inside diameter of main body 21 is the diameter of second through-hole H2.

In the present embodiment, as illustrated in FIG. 2 and FIG. 3, at least a portion of first through-hole H1 and at least a portion of second through-hole H2 overlap in the plan view and the bottom view. More specifically, in the plan view, the entirety of first through-hole H1 and the entirety of second through-hole H2 overlap. Thus, the diameter of first through-hole H1 (the inside diameter of fluorescent substrate 10) is the same as the diameter of second through-hole H2 (the inside diameter of main body 21). Furthermore, in the plan view and the bottom view, the center of the circular shape of first through-hole H1 and the center of the circular shape of second through-hole H2 overlap center point C1 of fluorescent substrate 10.

Transmissive fluorescence emitting module 1 according to the present embodiment includes fluorescent substrate 10 and metal member 20. Metal member 20 is bonded to third principal surface 11 of fluorescent substrate 10. Accordingly, even when heat is generated in fluorescent substrate 10 due to being irradiated with excitation light L1, the heat is readily transferred from fluorescent substrate 10 to metal member 20. In general, the metal material of metal member 20 has higher thermal conductivity than that of a fluorescent material such as YAG. Accordingly, the heat is readily transferred inside metal member 20, and readily dissipated from the surface of metal member 20 exposed to the atmosphere. Thus, since fluorescent substrate 10 and metal member 20 are configured as above, such heat is readily dissipated from fluorescent substrate 10. Accordingly, heat dissipation of fluorescent substrate 10 can be enhanced.

Here, advantageous effects yielded by transmissive fluorescence emitting module 1 according to the present embodiment are to be described.

As described above, when a thermal quenching phenomenon occurs in the transmissive fluorescence emitting module disclosed in PTL 1, efficiency of light usage decreases. However, in the present embodiment, the heat is readily dissipated from fluorescent substrate 10, and thus a rise in temperature of fluorescent substrate 10 due to being irradiated with excitation light L1 can be inhibited. Accordingly, a thermal quenching phenomenon does not readily occur, and thus a decrease in fluorescence can be inhibited.

Furthermore, transmissive fluorescence emitting module 1 according to the present embodiment does not include, for instance, a structural component for supporting fluorescent substrate 10. An example of such a structural component is a substrate for fluorescence disclosed in PTL 1. The substrate for fluorescence is made of a plate-shaped glass member that supports the fluorescence generator, for instance.

Here, behavior of light disclosed in PTL 1 is to be described. PTL 1 discloses that excitation light enters the substrate for fluorescence from the atmosphere. Furthermore, the excitation light that has entered the substrate for fluorescence passes through the substrate for fluorescence and enters the fluorescence generator, so that fluorescence is generated by the fluorescence generator. By the way, in PTL 1, a portion of excitation light that enters the substrate for fluorescence from the atmosphere is reflected toward the atmosphere, due to a difference between the index of refraction of the substrate for fluorescence and the index of refraction of the atmosphere. Thus, loss of excitation light occurs at the interface between the substrate for fluorescence and the atmosphere. As a result, as compared with the case where a portion of excitation light is not reflected, excitation light that enters the fluorescence generator decreases, and thus fluorescence generated in the fluorescence generator also decreases. Consequently, the transmissive fluorescence emitting module disclosed in PTL 1 has a problem that efficiency of light usage is low.

In contrast, in the present embodiment, as described above, transmissive fluorescence emitting module 1 according to the present embodiment does not include a structural component for supporting fluorescent substrate 10 (for example, the above substrate for fluorescence). Accordingly, loss of excitation light L1 as stated above does not occur, and thus excitation light L1 that enters fluorescent substrate 10 increases. As a result, fluorescence generated by the fluorescent material included in fluorescent substrate 10 increases.

To summarize the above, in transmissive fluorescence emitting module 1 according to the present embodiment, a thermal quenching phenomenon does not readily occur and loss of excitation light L1 does not occur, and thus efficiency of light usage can be increased.

In the present embodiment, metal member 20 includes main body 21.

Since main body 21 has the above configuration, the area in which fluorescent substrate 10 and metal member 20 (here, main body 21) are bonded to each other further increases. Accordingly, even when heat is generated in fluorescent substrate 10 due to being irradiated with excitation light L1, the heat is more readily dissipated from fluorescent substrate 10.

Here, thickness D21 of main body 21 is to be described with reference to FIG. 4.

FIG. 4 is a cross sectional view illustrating a cut surface of a portion of transmissive fluorescence emitting module 1, which is taken along line IV-IV in FIG. 1A. Note that FIG. 4 shows a side view of light emitter 200.

Thickness D21 of main body 21 (the length in the z-axis direction) may be greater than the thickness of fluorescent substrate 10. The reason is that this improves heat conductivity. On the other hand, when the thickness of fluorescent substrate 10 excessively increases, a load applied onto rotator 30 that is a motor increases, and the life thereof shortens. Thus, thickness D21 of main body 21 is preferably in a range from 0.2 mm to 50 mm, more preferably in a range from 0.5 mm to 10 mm, and yet more preferably in a range from 1 mm to 5 mm, as examples. The greater thickness D21 of main body 21 is, the more readily the heat is dissipated from fluorescent substrate 10. On the other hand, the smaller thickness D21 of main body 21 is, the less the volume of main body 21 is, or stated differently, the less the weight of main body 21 is. Accordingly, rotator 30 can rotate fluorescent substrate 10, for instance, using less energy. Thus, thickness D21 of main body 21 is preferably in the above ranges.

Furthermore, first radiator fins 22 that metal member 20 includes are to be described.

First radiator fins 22 are projections that protrude in a direction opposite the direction from main body 21 to fluorescent substrate 10. Thus, first radiator fins 22 are regions in contact with main body 21 and protrude in the negative z-axis direction. FIG. 4 illustrates thickness D22 of first radiator fins 22. Note that first radiator fins 22 have same thickness D22, but may have different thicknesses. Thickness D22 may be greater than thickness D21 of main body 21. Thickness D22 is preferably in a range from 1 mm to 150 mm, more preferably in a range from 2 mm to 30 mm, and yet more preferably in a range from 3 mm to 10 mm, as examples.

Note that the greater thickness D22 is, the more heat dissipation effects can be enhanced. On the other hand, when thickness D22 increases, the weight increases, so that a load applied onto rotator 30 that is a motor increases. In order to maintain rigidity against rotation, first radiator fins 22 need to have a great thickness in the circumference direction. If the thickness of first radiator fins 22 in the circumference direction decreases, conductivity of heat from main body 21 decreases, and as a result, heat dissipation performance deteriorates. The thickness of first radiator fins 22 in the circumference direction is preferably in a range from 0.2 mm to 3 mm, and more preferably in a range from 0.4 mm to 2 mm, when thickness D22 is 5 mm. Note that the thickness in the circumference direction may vary, and the above ranges show average values of thicknesses other than portions that are thick due to the influence of screws, for instance.

As illustrated in FIG. 1A, FIG. 1B, FIG. 2, and FIG. 3, here, twelve first radiator fins 22 are provided. In the plan view, twelve first radiator fins 22 radially extend. More specifically, twelve first radiator fins 22 extend radially with respect to axis B1. Thus, twelve first radiator fins 22 form a shape extending radially about center point C1 of fluorescent substrate 10. Twelve first radiator fins 22 extend radially about center point C1, spreading at equal intervals.

For example, when n first radiator fins 22 are provided, "spreading at equal intervals" means that an angle formed by the direction in which one first radiator fin 22 extends and the direction in which another first radiator fin 22 that is adjacent to the one first radiator fin 22 extends is an angle obtained by dividing 360 degrees by n. FIG. 2 shows direction D1 in which one first radiator fin 22 extends and direction D2 in which another first radiator fin 22 adjacent to the one first radiator fin 22 extends, with the dash-dot lines. In the present embodiment, out of twelve first radiator fins 22, an angle formed by direction D1 in which one first radiator fin 22 extends and direction D2 in which another first radiator fin 22 extends is 30 degrees.

Note that here, twelve first radiator fins 22 are provided, yet the present embodiment is not limited to this example and it is sufficient if at least one first radiator fin 22 is provided. First radiator fins 22 may be disposed, for example, in a matrix shape or an annular ring shape about center point C1, rather than being limited to the above.

Furthermore, as illustrated in FIG. 3, in the bottom view, first radiator fins 22 each include a region projecting toward center point C1. The projecting regions included in first radiator fins 22 project inward beyond the inner circle of main body 21 and provided at positions that overlap second through-hole H2. In the present embodiment, the entirety of first through-hole H1 and the entirety of second through-hole H2 overlap, and thus the projecting regions included in first radiator fins 22 are provided at positions that overlap first through-hole H1 and second through-hole H2.

As illustrated in FIG. 2 and FIG. 4, first radiator fins 22 each include second side surface 221 at a position most distant from axis B1. Second side surfaces 221 of first radiator fins 22 are slanting surfaces that spread in the positive z-axis direction. Second side surfaces 221 that are slanting surfaces are not parallel to the z axis. Furthermore, second side surfaces 221 and first side surface 213 of main body 21 are connected flush with each another. Second side surfaces 221 and first side surface 213 are parallel to one another at connected portions.

Since metal member 20 includes first radiator fins 22, the surface area of metal member 20 increases, so that heat is more readily dissipated from metal member 20. Accordingly, heat generated in fluorescent substrate 10 due to being irradiated with excitation light L1 is more readily dissipated from fluorescent substrate 10.

In the present embodiment, metal member 20 consists essentially of Al. Al is a metal material having high thermal conductivity, which is 237 W/m·K. The thermal conductivity of YAG included in the fluorescent material is 11.2 W/m·K. Accordingly, since metal member 20 consists essentially of Al, heat dissipation property of fluorescent substrate 10 can be further enhanced.

Note that metal member 20 may consist essentially of a material other than Al and Cu, and may consist essentially of one or more metal elements selected from among Ni, Pd, Rh, Mo, W, and Cu or an alloy that includes one or more of the metal elements, for example. The elements have thermal conductivity as follows: thermal conductivity of Ni is 83 W/m·K, thermal conductivity of Pd is 73 W/m·K, thermal conductivity of Rh is 150 W/m·K, thermal conductivity of Mo is 135 W/m·K, thermal conductivity of W is 163 W/m·K, and thermal conductivity of Cu is 395 W/m·K. Accordingly, heat dissipation property of wavelength conversion member 10 can be further enhanced by making metal member 20 using such a metal material.

Next, rotator 30 is to be described.

Rotator 30 is located on the z-axis negative side with respect to metal member 20. Thus, metal member 20 is located between rotator 30 and fluorescent substrate 10. Here, rotator 30 is bonded to metal member 20. As illustrated in FIG. 2, rotator 30 is provided at a position that overlaps fluorescent substrate 10, in the plan view.

Rotator 30 is a member that rotates fluorescent substrate 10 and metal member 20 about axis B1 that extends in the thickness direction (z-axis direction) of fluorescent substrate 10, and is a motor as an example. More specifically, in the present embodiment, rotator 30 rotates fluorescent substrate 10 and metal member 20 about axis B1 in the direction indicated by arrow R illustrated in FIG. 1A. Note that rotator 30 may rotate fluorescent substrate 10 and metal member 20 in the direction opposite the direction indicated by arrow R illustrated in FIG. 1A. As illustrated in FIG. 1B, axis B1 passes through center point C1 of fluorescent substrate 10.

Further, rotator 30 includes disc 31 and a rotation shaft having a center along axis B1. Disc 31 is a plate-shaped member having a circular shape in the plan view, as illustrated in FIG. 2. The diameter of disc 31 is the same as the diameter of main body 21 that metal member 20 includes.

As described above, rotator 30 is bonded to metal member 20. More specifically, disc 31 is bonded to first radiator fins 22 that metal member 20 includes. As illustrated in FIG. 2, disc 31 covers metal member 20 on the z-axis negative side.

Disc 31 and first radiator fins 22 may be bonded to each other using bolts or screws, for instance. In the present embodiment, disc 31 is bonded to first radiator fins 22 with a bonding layer being provided therebetween. In this case, as an example of the bonding layer, a bonding layer same as the bonding layer that bonds metal member 20 and fluorescent substrate 10 to each other is used.

As stated above, transmissive fluorescence emitting module 1 according to the present embodiment includes rotator 30. In this manner, fluorescent substrate 10, for instance, rotates about axis B1, thus generating air currents. Fluorescent substrate 10 is cooled by the generated air currents. Accordingly, a rise in temperature of fluorescent substrate 10 can be inhibited even when fluorescent substrate 10 is irradiated with excitation light L1, and thus a thermal quenching phenomenon does not readily occur and a decrease in fluorescence is inhibited. Thus, efficiency of light usage achieved by transmissive fluorescence emitting module 1 can be increased.

As described above, in the present embodiment, first radiator fins 22 that metal member 20 includes extend radially. Thus, when fluorescent substrate 10, for instance, is rotated by rotator 30, air currents having a higher flow velocity are generated.

Furthermore, in the present embodiment, first through-hole H1 and second through-hole H2 overlap each other. Accordingly, when fluorescent substrate 10, for instance, is rotated by rotator 30, air currents having a still higher flow velocity are generated.

FIG. 1A illustrates examples of such air currents using arrows shown by the dash-dot lines. Thus, the air currents pass through first through-hole H1, second through-hole H2, and spaces between first radiator fins 22 in this order and travel toward region A1 that fluorescent substrate 10 includes. Accordingly, since heat generated in region A1 by being irradiated with excitation light L1 is cooled by the air currents, a rise in temperature of fluorescent substrate 10 can be inhibited. Thus, since first radiator fins 22 included in metal member 20 extend radially, heat dissipation property of transmissive fluorescence emitting module 1 can be further enhanced. Furthermore, since first through-hole H1 and second through-hole H2 overlap each other, air currents having a still higher flow velocity are generated. Accordingly, a rise in temperature of fluorescent substrate 10 can be further inhibited.

As described above, first radiator fins 22 each include a region projecting toward center point C1. Accordingly, the air currents readily pass through first through-hole H1, second through-hole H2, and spaces between first radiator fins 22. Hence, air currents having a yet higher flow velocity are generated, and a rise in temperature of fluorescent substrate 10 can be further inhibited.

Here, in the present embodiment, disc 31 covers metal member 20. Accordingly, air currents generated when fluorescent substrate 10, for instance, is rotated by rotator 30 readily travel toward region A1, and a rise in temperature of fluorescent substrate 10 can be further inhibited.

In the present embodiment, first radiator fins 22 are provided between main body 21 and disc 31. In this case, space is provided between one first radiator fin 22 and another first radiator fin 22 adjacent to the one first radiator fin 22. Thus, the provided space contributes to reduction in weight of metal member 20. Accordingly, rotator 30 can rotate fluorescent substrate 10 and metal member 20 using less energy.

### [Configuration of projector]

Transmissive fluorescence emitting module 1 having a configuration as described above is used in projector 500 illustrated in FIG. 5. FIG. 5 is a perspective view illustrating an appearance of projector 500 according to the present embodiment. FIG. 6 is a schematic diagram illustrating transmissive fluorescence emitting module 1 in projector 500 according to the present embodiment. In the following, a configuration of projector 500 according to the present embodiment is to be described with reference to FIG. 6.

As illustrated in FIG. 6, projector 500 according to the present embodiment includes transmissive fluorescence emitting module 1. Projector 500 includes casing 300, first optical element 301, second optical element 302, third optical element 303, fourth optical element 304, and a display element (not illustrated).

Casing 300 is a metal case that stores therein fluorescent substrate 10, metal member 20, rotator 30, first optical element 301, second optical element 302, and fourth optical element 304. Note that casing 300 stores therein a portion of each of two light emitters 200 and a portion of third optical element 303. The inner space of casing 300 is a closed space. Thus, fluorescent substrate 10, metal member 20, rotator 30, first optical element 301, second optical element 302, and fourth optical element 304 are protected by casing 300, and are less likely to be polluted by dust or dirt, for instance.

First optical element 301, second optical element 302, and third optical element 303 are optical members that control optical paths of transmitted light L2 output from transmissive fluorescence emitting module 1. As an example, first optical element 301, second optical element 302, and third optical element 303 are lenses that collect transmitted light L2. As illustrated in FIG. 6, first optical element 301, second optical element 302, and third optical element 303 are disposed closer to fourth principal surface 12 of fluorescent substrate 10 than to third principal surface 11. If the size of projector 500 needs to be decreased, the distances from transmissive fluorescence emitting module 1 to first optical element 301, second optical element 302, and third optical element 303 need to be shortened.

Fourth optical element 304 is an optical member that controls optical paths of excitation light L1 output from two light emitters 200. As an example, fourth optical element 304 is a lens for collecting transmitted light L2. As illustrated in FIG. 6, fourth optical element 304 is disposed closer to third principal surface 11 of fluorescent substrate 10 than to fourth principal surface 12. As illustrated in FIG. 6, since excitation light L1 is collected by fourth optical element 304, excitation light L1 enters fluorescent substrate 10 also in a slanting direction (that is, a direction different from a direction vertical to third principal surface 11).

The display element is a substantially planar element that controls and outputs transmitted light L2 as a video. In other words, the display element generates light for a video. The display element is specifically a transmissive liquid crystal panel. For example, the display element may be a reflective liquid crystal panel or may be a digital light processing (DLP) panel that includes a digital micromirror device (DMD).

Next, behavior of light in FIG. 6 is to be described.

Excitation light L1 emitted by light emitters 200 enters region A1 included in fluorescent substrate 10 in transmissive fluorescence emitting module 1. A wavelength of a portion of excitation light L1 that has entered is converted by the fluorescent material included in region A1, and the portion of excitation light L1 passes through fluorescent substrate 10 in the form of fluorescence. A wavelength of another portion of excitation light L1 that has entered is not converted by the fluorescent material included in region A1, and the other portion of excitation light L1 passes through fluorescent substrate 10. Transmitted light L2 passing through fluorescent substrate 10 is combined light that includes fluorescence that is yellow light and excitation light L1 that is blue light having a wavelength not converted, and is white light. Furthermore, transmitted light L2 exits through fluorescent substrate 10. Thus, as described above, fluorescent substrate 10 is used as a light-transmissive phosphor wheel, in the present embodiment.

As described above, since the shape of region A1 is an annular ring shape, when fluorescent substrate 10, for instance, is rotated by rotator 30, excitation light L1 readily enters region A1. Accordingly, fluorescent substrate 10 can be more readily used as a phosphor wheel.

Transmitted light L2 that has exited through fluorescent substrate 10 is collected by first optical element 301, second optical element 302, and third optical element 303, and exits therethrough. Note that first optical element 301, second optical element 302, and third optical element 303 may not collect transmitted light L2 that has exited through fluorescent substrate 10. For example, first optical element 301, second optical element 302, and third optical element 303 may substantially collimate transmitted light L2 that has exited or cause transmitted light L2 that has exited to slightly spread out. An angle of radiation of transmitted light L2 exiting through first optical element 301, second optical element 302, and third optical element 303 may be an angle of radiation at which light efficiently travels in projector 500 and an illumination device in each of which transmissive fluorescence emitting module 1 is used.

Transmitted light L2 that has exited through first optical element 301, second optical element 302, and third optical element 303 travels toward the display element that is not illustrated. Light for a video generated by the display element is projection light that is to be enlarged and projected onto a screen. Thus, transmitted light L2 is used as projection light output by projector 500. Note that an optical element not illustrated, for instance, is provided between third optical element 303 and the display element, and the optical paths of transmitted light L2 may be controlled by the optical element.

In the present embodiment, transmissive fluorescence emitting module 1 includes light emitters 200 that each emit excitation light L1 that is to enter region A1. Region A1 is a region of fluorescent substrate 10, which does not overlap metal member 20. Thus, loss of light such as reflection of excitation light L1 by metal member 20 is less likely to occur. Accordingly, excitation light L1 readily enters fluorescent substrate 10, and generates fluorescence that is light having a converted wavelength.

In the present embodiment, the shape of main body 21 is circular in the plan view. With regard to first principal surface 211 and second principal surface 212 on opposite sides from each other, the area of first principal surface 211 is greater than the area of second principal surface 212. Thus, the shape of main body 21 is a truncated cone shape. As described above, excitation light L1 enters region A1 of fluorescent substrate 10 in a slanting direction. Thus, since main body 21 has the above configuration, excitation light L1 is less likely to be blocked by metal member 20. Thus, loss of excitation light L1 due to being blocked by metal member 20 can be inhibited. Thus, excitation light L1 readily reaches region A1 of fluorescent substrate 10. As described above, transmissive fluorescence emitting module 1 that achieves higher efficiency of light usage can be produced.

In the present embodiment, projector 500 includes transmissive fluorescence emitting module 1 that achieves high efficiency of light usage. Accordingly, projector 500 that achieves high efficiency of light usage can be produced.

The inner space of casing 300 is a closed space in order to inhibit pollution due to dust and dirt, for instance, and thus heat is not readily dissipated. In the present embodiment, first through-hole H1 and second through-hole H2 are provided. Thus, air currents generated when fluorescent substrate 10, for instance, is rotated by rotator 30 travel from the third principal surface 11 side toward the fourth principal surface 12 side. Accordingly, air currents circulate in the entire inner space of casing 300, and thus heat generated in fluorescent substrate 10 due to being irradiated with excitation light L1 is readily transferred from casing 300 to the outside. Hence, the heat is more readily dissipated from fluorescent substrate 10.

Furthermore, casing 300 is to be described in more detail.

FIG. 7 is a perspective view illustrating casing 300 according to the present embodiment. As illustrated in FIG. 7, casing 300 includes nine structural components. The nine structural components are front surface member 311, first left surface member 312, second left surface member 313, first right surface member 314, second right surface member 315, first bottom surface member 316, second bottom surface member 317, top surface member 318, and back surface member 319. Casing 300 includes connecting members (such as screws) for connecting the nine structural components to one another.

The nine structural components are formed by processing metal plates such as steel plates, for example. Thus, the nine structural components are formed by cutting or bending such metal plates. Casing 300 is a case obtained by combining such nine structural components. Since the nine structural components included in casing 300 is each formed of a processed metal plate, the weight of casing 300 can be made lighter than a casing having a die-cast structure, for example.

### [Manufacturing Method]

Here, a method for manufacturing fluorescent substrate 10 is to be briefly described.

A fluorescent material included in fluorescent substrate 10 consists essentially of a crystalline phase represented by (Y_{0.999}Ce_{0.001})₃Al₅O₁₂. Further, the fluorescent material consists essentially of a Ce³⁺ active fluorescence substance.

The following three raw materials are used as powdered chemical compounds to manufacture fluorescent substrate 10. Specifically, Y₂O₃ (purity 3N, Nippon Yttrium Co., Ltd.), Al₂O₃ (purity 3N, Sumitomo Chemical Co., Ltd.), and CeO₂ (purity 3N, Nippon Yttrium Co., Ltd.) are used.

First, the raw materials are weighted to obtain a chemical compound of stoichiometry (Y_{0.999}Ce_{0.001})₃Al₅O₁₂. Next, the weighted raw materials and alumina balls (having a diameter of 10 mm) are put into a plastic pot. The amount of alumina balls is sufficient to fill about 1/3 of the volume of the plastic pot. After that, pure water is put into the plastic pot, and the raw materials and the pure water are mixed using a pot rotator (manufactured by Nitto Kagaku Co., Ltd., BALL MILL ANZ-51S). The raw materials and the pure water are mixed for 12 hours. Accordingly, a slurried mixed raw material is obtained.

The slurried mixed raw material is dried using a drier. Specifically, a NAFLON sheet is placed so as to cover the inner walls of a metal vat, and the mixed raw material is poured onto the NAFLON sheet. The metal vat, the NAFLON sheet, and the mixed raw material are processed for eight hours in the drier that is set to 150 degrees Celsius and dried. After that, the dried mixed raw material is collected, and granulated using a spray dryer device. Note that when the raw material is granulated, an acrylic binder is used as an adhesive (a binder).

The granulated mixed raw material is temporarily molded into a cylinder using an electric hydraulic press (manufactured by Riken Seiki Co., Ltd., EMP-5) and a cylindrical metal mold. The pressure applied when the raw material is molded is set to 5 MPa. Next, the temporarily molded raw material is firmly molded using a cold isostatic press. The pressure applied when the raw material is firmly molded is set to 300 MPa. Note that the raw material firmly molded is subjected to heat treatment (binder removal treatment) in order to remove the adhesive (binder) used when the raw material is granulated. The temperature for the heat treatment is set to 500 degrees Celsius. Furthermore, the time for the heat treatment is set to 10 hours.

The molded raw material subjected to the heat treatment is baked using a tube atmospheric furnace. The baking temperature is set to 1675 degrees Celsius. The baking time is set to 4 hours. The baking atmosphere is a mixed gas atmosphere of nitrogen and hydrogen.

The cylindrical baked product is sliced using a multi-wire saw. The thickness of the sliced cylindrical baked product is about 700 µm.

The sliced baked product is ground using a grinding device to adjust the thickness of the baked product. By making this adjustment, the baked product becomes fluorescent substrate 10.

### [Temperature of fluorescent substrate]

Here, the temperature of fluorescent substrate 10 in transmissive fluorescence emitting module 1 according to the present embodiment is to be described using a transmissive fluorescence emitting module according to an example to be considered. First, a transmissive fluorescence emitting module according to an example to be considered is to be described.

FIG. 8 is a plan view of fluorescent substrate 10, metal member 20x, and rotator 30 that are included in the transmissive fluorescence emitting module according to the example to be considered. FIG. 9 is a plan view of fluorescent substrate 10, metal member 20, and rotator 30 according to the present embodiment. FIG. 10 is a perspective view of fluorescent substrate 10, metal member 20x, and rotator 30 that are included in the transmissive fluorescence emitting module according to the example to be considered. FIG. 11 is a perspective view of fluorescent substrate 10, metal member 20, and rotator 30 according to the present embodiment.

As illustrated in FIG. 8 and FIG. 10, the transmissive fluorescence emitting module according to the example to be considered includes fluorescent substrate 10, metal member 20x, and rotator 30. The transmissive fluorescence emitting module according to the example to be considered includes two light emitters 200 (not illustrated). The transmissive fluorescence emitting module according to the example to be considered is different from transmissive fluorescence emitting module 1 according to the present embodiment in the shape of metal member 20x only.

Here, metal member 20x is to be described.

Metal member 20x has a similar configuration to that of metal member 20 except its shape. Metal member 20x is a plate-shaped member stacked over fluorescent substrate 10. More specifically, as illustrated in FIG. 8 and FIG. 10, the shape of metal member 20x is a cylindrical shape.

As illustrated in FIG. 8, FIG. 9, FIG. 10, and FIG. 11, the outside diameter of metal member 20 (here, the outside diameter of main body 21) is greater than the outside diameter of metal member 20x. The outside diameter of metal member 20x means the diameter of metal member 20x.

The outside diameter (diameter) of metal member 20x is 28 mm. Further, FIG. 8 illustrates radius D31x of metal member 20x, and radius D31x of metal member 20x is 14 mm.

Note that similarly, FIG. 9 illustrates radius D31 of main body 21. As described above, radius D31 of main body 21 is 17 mm.

Fluorescent substrate 10 according to the example to be considered includes annular ring-shaped region A1x that does not overlap metal member 20x in the plan view. Note that region A1x and region A1 correspond to regions between two circles indicated by the dash-dot lines in FIG. 8 and FIG. 9, respectively.

In the present embodiment, main body 21 and region A1 are adjacent to each other in the plan view of fluorescent substrate 10. Here, the inner circle of annular ring-shaped region A1 is in contact with main body 21 (more specifically, first principal surface 211).

Similarly, in the example to be considered, metal member 20x and region A1 are adjacent to each other in the plan view of fluorescent substrate 10. The inner circle of annular ring-shaped region A1x is in contact with metal member 20x.

Furthermore, the temperature of fluorescent substrate 10 is to be described. Here, a temperature of fluorescent substrate 10 when rotator 30 rotates fluorescent substrate 10 and metal member 20x/20 and region A1x/A1 is irradiated with excitation light L1 is to be described. More specifically, excitation light L1 is emitted onto an irradiation center position in region A1x/A1. FIG. 8 and FIG. 9 illustrate irradiation center position distance D32 that is a distance between center point C1 and the irradiation center position of excitation light L1, and irradiation center position distance D32 is 18 mm.

FIG. 12 illustrates temperature profiles of fluorescent substrates 10 according to the example to be considered and the present embodiment. More specifically, the temperature profile of fluorescent substrate 10 according to the example to be considered shows a temperature measured along measurement line M1 illustrated in FIG. 8. Similarly, the temperature profile of fluorescent substrate 10 according to the present embodiment shows a temperature measured along measurement line M2 illustrated in FIG. 9. Measurement line M1 and measurement line M2 are virtual straight lines parallel to the x axis. A position at a distance of 0 mm in FIG. 12 corresponds to center point C1 in FIG. 8 and FIG. 9.

As illustrated in FIG. 12, in the example to be considered, a temperature at a distance of 18 mm that is the irradiation center position of excitation light L1 (specifically, a position distant from a distance of 0 mm by irradiation center position distance D32) is the highest among the temperatures at other positions. In the present embodiment, a similar tendency is exhibited.

However, a comparison between the example to be considered and the present embodiment shows that the temperature in the present embodiment is lower than the temperature in the example to be considered at the irradiation center position of excitation light L1.

As described above, radius D31 of main body 21 is longer than radius D31x of metal member 20x. Thus, main body 21 is provided at a position closer to the irradiation center position of excitation light L1 than metal member 20x is thereto. Accordingly, even when heat is generated in fluorescent substrate 10 due to being irradiated with excitation light L1, the heat is readily transferred from fluorescent substrate 10 to main body 21 (that is, metal member 20). Thus, in the present embodiment, heat dissipation of fluorescent substrate 10 can be further enhanced.

To summarize the above, in the present embodiment, main body 21 and region A1 are adjacent to each other in the plan view of fluorescent substrate 10. Furthermore, radius D31 of main body 21 may be shorter than irradiation center position distance D32, and main body 21 may be provided at a position closer to the irradiation center position of excitation light L1. For example, a difference between radius D31 of main body 21 and irradiation center position distance D32 is preferably 3 mm or less, more preferably 2 mm or less, and yet more preferably 1 mm or less.

Accordingly, heat generated by being irradiated with excitation light L1 is readily transferred from fluorescent substrate 10 to main body 21 (that is, metal member 20), and thus heat dissipation of fluorescent substrate 10 can be further enhanced.

### [Variation 1 of Embodiment 1]

Next, transmissive fluorescence emitting module 1a according to Variation 1 of Embodiment 1 is to be described with reference to FIG. 13A and FIG. 13B. FIG. 13A is a perspective view of transmissive fluorescence emitting module 1a according to this variation. FIG. 13B is an exploded perspective view of transmissive fluorescence emitting module 1a according to this variation.

Transmissive fluorescence emitting module 1a according to this variation includes fluorescent substrate 10, metal member 20a, rotator 30, and two light emitters 200. Note that FIG. 13A and FIG. 13B illustrate one light emitter 200 for convenience.

Thus, transmissive fluorescence emitting module 1a according to this variation is different from transmissive fluorescence emitting module 1 according to Embodiment 1 in that metal member 20a is provided instead of metal member 20.

Here, metal member 20a is to be described. Metal member 20a has a similar configuration to that of metal member 20 except its shape. Metal member 20a includes main body 21a and a plurality of first radiator fins 22a.

Main body 21a is a plate-shaped member stacked over fluorescent substrate 10.

The shape of main body 21a is circular in the plan view. Furthermore, second through-hole H2 is provided in main body 21a, and thus the shape of main body 21a is an annular ring shape.

Main body 21 includes first side surface 213a. First side surface 213a protrudes from fluorescent substrate 10 in the vertical direction, and thus extends in a direction parallel to the z axis, as illustrated in FIG. 13A.

Furthermore, first radiator fins 22a that metal member 20a includes are to be described. First radiator fins 22 are projections that protrude in a direction opposite the direction from main body 21 to fluorescent substrate 10.

As illustrated in FIG. 13A and FIG. 13B, here, twelve first radiator fins 22a are provided. In the plan view, twelve first radiator fins 22a radially extend.

First radiator fins 22a each include second side surface 211a at a position most distant from axis B1. Second side surfaces 211a of first radiator fins 22a extend in a direction parallel to the z axis, similarly to first side surface 213a. Furthermore, second side surfaces 211a and first side surface 213a of main body 21a are connected flush with each other. Second side surfaces 211a and first side surface 213a are parallel to one another at connected portions.

Fluorescent substrate 10 according to Variation 1 includes annular ring-shaped region A2 that does not overlap metal member 20a in the plan view. Note that region A2 corresponds to a region between two circles indicated by the dash-dot lines in FIG. 13B.

As described above, transmissive fluorescence emitting module 1a includes fluorescent substrate 10, metal member 20a, rotator 30, and two light emitters 200. Accordingly, similarly, to transmissive fluorescence emitting module 1 according to Embodiment 1, transmissive fluorescence emitting module 1a that can enhance efficiency of light usage can be produced.

### [Variation 2 of Embodiment 1]

Next, a transmissive fluorescence emitting module according to Variation 2 of Embodiment 1 is to be described with reference to FIG. 14.

FIG. 14 is a perspective view of a transmissive fluorescence emitting module according to Variation 2 of the present embodiment. Note that FIG. 14 omits illustration of light emitters 200.

The transmissive fluorescence emitting module according to this variation is different from transmissive fluorescence emitting module 1a in that cover 40 is provided in addition to the structural components that transmissive fluorescence emitting module 1a according to Variation 1 includes.

Cover 40 is a resin or metal member that includes cover main body 41 and channel 42. Cover 40 is not rotated by rotator 30.

Cover main body 41 is a member covering fluorescent substrate 10 and metal member 20a. In this variation, a portion of rotator 30 is exposed from a circular hole provided in cover main body 41 on the z-axis negative side. Thus, cover main body 41 covers the other portion of rotator 30, fluorescent substrate 10, and metal member 20a. Since such cover main body 41 is provided, air currents generated when rotator 30 rotates fluorescent substrate 10 and metal member 20a can be controlled.

Channel 42 is a member connected to cover main body 41. In the plan view, channel 42 is provided at a position that overlaps region A2 where excitation light L1 enters. Furthermore, the controlled air currents flow through channel 42.

Since cover 40 has the above configuration, air currents generated when rotator 30 rotates fluorescent substrate 10, for instance, flow toward region A2. More specifically, the air currents pass over region A2 on the z-axis negative side. Note that FIG. 14 illustrates an example of such an air current using an arrow shown by the dash-dot line. Fluorescent substrate 10 is cooled by the generated air currents. Thus, a thermal quenching phenomenon does not readily occur and a decrease in fluorescence is inhibited, and thus efficiency of light usage achieved by the transmissive fluorescence emitting module according to this variation can be further enhanced.

### [Variation 3 of Embodiment 1]

Next, a transmissive fluorescence emitting module according to Variation 3 of Embodiment 1 is to be described with reference to FIG. 15.

FIG. 15 is a bottom view of fluorescent substrate 10 and metal member 20b according to Variation 3 of the present embodiment. In FIG. 15, rotator 30 and light emitters 200 are omitted. Note that region A3 that fluorescent substrate 10 according to Variation 3 includes corresponds to a region between two circles indicated by the dash-dot lines in FIG. 15.

In this variation, the shape of first radiator fins 22b is different from the shape of first radiator fins 22 shown in the above embodiment. First radiator fins 22b have an arc shape that curves in the bottom view. In other words, first radiator fins 22b have a spiral shape. Since first radiator fins 22b have such a shape, air currents having a still higher flow velocity are generated when rotator 30 rotates fluorescent substrate 10, for instance.

Note that it is sufficient if transmissive fluorescence emitting module 1 according to the present embodiment includes fluorescent substrate 10, metal member 20, and rotator 30. In the plan view of fluorescent substrate 10, fluorescent substrate 10 may include annular ring-shaped region A1 that does not overlap metal member 20.

By providing metal member 20, heat is readily dissipated from fluorescent substrate 10. Accordingly, a thermal quenching phenomenon does not readily occur, and thus a decrease in fluorescence can be reduced.

Furthermore, transmissive fluorescence emitting module 1 does not include, for instance, a structural component for supporting fluorescent substrate 10. Accordingly, loss of excitation light L1 as stated above does not occur, and thus excitation light L1 that enters fluorescent substrate 10 increases. As a result, fluorescence generated by the fluorescent material in fluorescent substrate 10 increases.

In addition, by providing rotator 30, fluorescent substrate 10, for instance, is rotated about axis B1, thus generating air currents. Fluorescent substrate 10 is cooled by the generated air currents. Accordingly, a rise in temperature of fluorescent substrate 10 can be inhibited even when fluorescent substrate 10 is irradiated with excitation light L1, and thus a thermal quenching phenomenon does not readily occur and a decrease in fluorescence is inhibited.

To summarize the above, in transmissive fluorescence emitting module 1, a thermal quenching phenomenon does not readily occur and excitation light L1 is less likely to be lost, and thus efficiency of light usage can be increased.

### [Embodiment 2]

Transmissive fluorescence emitting module 1 including fluorescent substrate 10 provided with first through-hole H1, a metal member provided with second through-hole H2, and rotator 30 which are assembled in conjunction as illustrated in FIG. 1A and FIG. 1B, for example, has been described in Embodiment 1. In transmissive fluorescence emitting module 1 described above, first through-hole

H1 and second through-hole H2 are assembled to overlap, and air currents generated when fluorescent substrate 10, for instance, is rotated by rotator 30 travel from the third principal surface 11 side toward the fourth principal surface 12 side. In other words, the heat generated in fluorescent substrate 10 due to being irradiated with excitation light L1 is cooled by causing the air currents generated when fluorescent substrate 10, for instance, is rotated by rotator 30 to pass through (to allow air to flow) first through-hole H1 and second through-hole H2.

However, depending on the type of the motor used in rotator 30, second through-hole H2 of metal member 20 may be fitted to the motor shaft of rotator 30. Accordingly, there are instances where second through-hole H2 cannot provide sufficient clearance for air to flow, and thus cooling effects cannot be exerted.

In view of the above, in Embodiment 2, a transmissive fluorescence emitting module; that is, phosphor wheel 1B capable of achieving cooling effects even when the through-hole provided at the center of the metal member cannot exert cooling effects is to be described. The following focuses on the points that differ from metal member 20 described in Embodiment 1.

### [Phosphor Wheel 1B]

FIG. 16 is a perspective view of phosphor wheel 1B according to Embodiment 2.

Phosphor wheel 1B according to Embodiment 2 is a phosphor wheel that is transmissive and used in a light emitting device typified by a projector and an illumination device in the same manner as Embodiment 1.

Phosphor wheel 1B includes fluorescent substrate 10B including a fluorescent material, metal member 20B, and rotator 30B, as illustrated in FIG. 16. Note that the same reference sign is given to structural components that are substantially same as those in FIG. 1A and FIG. 1B, for example, and detailed description thereof will be omitted.

### [Fluorescent Substrate 10B]

FIG. 17 is a front view of fluorescent substrate 10B according to Embodiment 2. FIG. 18 is a side view of fluorescent substrate 10B illustrated in FIG. 17.

Fluorescent substrate 10B is a substrate consists essentially of a fluorescent material. Fluorescent substrate 10B includes an annular ring-shaped region that does not overlap metal member 20B in a plan view. As illustrated in FIG. 17, fluorescent substrate 10B includes: annular ring-shaped region A11 having inside diameter R1 and outside diameter R2 with substantially equal distance from center point C1; and first through-hole 101B that is a hole penetrating through fluorescent substrate 10 in the thickness direction (the z-axis direction) of fluorescent substrate 10.

Fluorescent substrate 10B has inside diameter R1 that is larger than the inside diameter of fluorescent substrate 10 illustrated in FIG. 1A and FIG. 1B, etc., and a portion of metal member 20B which will be described later is fitted to first through-hole 101B. On the metal member 20B side, a portion of metal member 20 is bonded to an area of a few millimeters of the inner circumference side of annular ring-shaped region A11 with an adhesive member or the like. The details thereof will be described later. On the opposite side of metal member 20B, a portion of the metal member is fitted to the inner circumference of annular ring-shaped region A11. In this manner, the region except the area of a few millimeters of the inner circumference side of annular ring-shaped region A11 is an annular ring-shape region that does not overlap metal member 20B in the plan view.

Outside diameter R2 of fluorescent substrate 10B, for example, is in a range from 40 mm to 50 mm, but is not limited to these examples. Outside diameter R2 of fluorescent substrate 10B may be in a range from 35 mm to 70 mm, or in a range from 30 mm to 90 mm.

Inside diameter R1 of fluorescent substrate 10B is smaller than outside diameter R2 of fluorescent substrate 10B, for example, in a range from 30 mm to 40 mm, but is not limited to these examples. Inside diameter R1 of fluorescent substrate 10B may be in a range from 25 mm to 60 mm, or in a range from 20 mm to 80 mm.

Thickness t₁ of fluorescent substrate 10B illustrated in FIG. 18 is approximately 0.2 mm, for example, but is not limited to these examples. Thickness t₁ of fluorescent substrate 10B may be in a range from 0.1 mm to 0.3 mm, or in a range from 0.08 mm to 0.5 mm. Outside diameter R2, inside diameter R1, and thickness t₁ of fluorescent substrate 10B may be determined as appropriate to be accommodated in the casing of the product, such as a projector, for example, to which phosphor wheel 1B is applied.

Other configurations such as the material of phosphor substrate 10B are equivalent to those in Embodiment 1, and thus are omitted from the description.

### [Metal Member 20B]

FIG. 19 is a perspective view of metal member 20B viewed from the z-axis negative side according to Embodiment 2. FIG. 20 is a perspective view of metal member 20B viewed from the z-axis positive side according to Embodiment 2. FIG. 21 is a partially enlarged side view of metal member 20B of FIG. 20. FIG. 21 illustrates a schematically enlarged side of metal member 20B in region L indicated in FIG. 20.

Metal member 20B illustrated in FIG. 19 and FIG. 20 is different from metal member 20 illustrated in FIG. 1A and FIG. 1B mainly in that a plurality of openings 206 are further provided.

Metal member 20B is bonded to third principal surface 11 of fluorescent substrate 10B. Metal member 20B includes main body 201, a plurality of first radiator fins 202, a second through-hole 205, and a plurality of openings 206. In the present embodiment as well, metal member 20B is located on the z-axis negative side with respect to fluorescent substrate 10B, and is bonded to third principal surface 11 (not illustrated). Note that the material, etc. of metal member 20B are equivalent to those of Embodiment 1, and thus are omitted from the description.

### [Main Body 201]

Main body 201 is a plate-shaped member, and is fitted to fluorescent substrate 10B. Main body 201 has a circular shape. The outside diameter of main body 201 is smaller than the outside diameter of fluorescent substrate 10B, and is larger than the inside diameter of fluorescent substrate 10B. The outside diameter of main body 201 is 34 mm, for example, but is not limited to this example. The outside diameter of main body 201 may be in a range from 17 mm to 48 mm, and the maximum value thereof is sufficient if it is less than or equal to the value at which annular ring-shaped region A11 of fluorescent substrate 10B can be effectively irradiated with laser light of, for example, approximately 1 mm in diameter. The minimum value is sufficient if it is determined as appropriate in consideration of the rotor shaft diameter of the motor used in rotator 30B and the minimum size at which the opening which will be described later functions effectively. In addition, the thickness of main body 201 is approximately 3 mm, for example, but is not limited to this example. The upper limit is sufficient if it is determined as appropriate such that the load on the motor used in rotator 30B during rotation does not exceed the tolerance of the motor.

In the present embodiment, main body 201 includes step region 201a and fit region 201b on the z-axis negative side as illustrated in FIG. 20. Step region 201a is recessed in the z-axis direction by t₂ mm compared to fit region 201b as illustrated in FIG. 21. An adhesive member is applied to step region 201a, and metal member 20B is bonded to fluorescent substrate 10B. Note that a silicone resin may be used in order to reduce a difference between thermal expansion coefficients, for example, as described in Embodiment 1, but is not limited to this example. The adhesive member may also be another epoxy resin or a highly heat-conductive adhesive that contains nano Ag or nano Cu. Step region 201a of metal member 20B may be structured to be directly in contact with third principal surface 11 of fluorescent substrate 10 without using any adhesives. In this case, metal member 20B may be configured to sandwich fluorescent substrate 10B together with a metal member which is not illustrated and is different from metal member 20B. For example, by bonding a portion of fit region 201b of metal member 20B to the metal member which is not illustrated, it is possible to sandwich fluorescent substrate 10B between step region 201a and a portion of the outer circumference region of the metal member which is not illustrated. The recess of t₂ of step region 201a is, for example, approximately 0.3 mm, but is not limited to this example. The recess of t₂ is sufficient if the surface of fit region 201b protrudes from fluorescent substrate 10B in the z-axis direction, and may be determined as appropriate according to the thickness of fluorescent substrate 10B.

In this manner, step region 201a of main body 201 is bonded to the region in proximity to the inner circumferential edge of annular ring-shaped region A11 with an adhesive member, and the surface of fit region 201b protrudes from fluorescent substrate 10B in the z-axis direction. As a result, metal member 20B is fitted to fluorescent substrate 10B.

### [First Radiator Fin 202]

The plurality of first radiator fins 202 are arranged radially with respect to a central axis (center point C1) in a region except a region including the central axis of metal member 20B in a plan view of metal member 20B. Note that, the central axis of metal member 20B is the same axis as axis B1. In the present embodiment, the plurality of first radiator fins 202 extend radially with respect to center point C1 and spread at equal intervals in the region except second through-hole 205 on the z-axis negative side of metal member 20B.

The plurality of first radiator fins 202 are arranged to protrude in the direction away from third principal surface 11 (not illustrated) in metal member 20B. In other words, the plurality of first radiator fins 202 are erected to protrude in the direction (in the negative z-axis direction) from, out of the two principal surfaces that fluorescent substrate 10B includes, one principal surface (third principal surface 11) to which metal member 20B is bonded, to the other principal surface (fourth principal surface 12). The plurality of first radiator fins 202 are same in thickness. In the present embodiment, as illustrated in FIG. 19, etc., the case where the plurality of first radiator fins 202 have two different widths is illustrated as an example. In the example illustrated in FIG. 19, among the plurality of first radiator fins 202, first radiator fins 202b are bonded to disc 31 of rotator 30B with screws, and the width of each of first radiator fins 202a is narrower than the width of each of first radiator fins 202b among the plurality of first radiator fins 202. In other words, in the example illustrated in FIG. 19, since first radiator fins 202b are bonded to disc 31 of rotator 30B with screws, first radiator fins 202b are larger in width than first radiator fins 202a. Note that, first radiator fins 202b may be identical in width to first radiator fins 202a even when first radiator fins 202b are bonded to disc 31 of rotator 30B with screws. In addition, the present disclosure is not limited to the case where first radiator fins 202b are bonded to disc 31 of rotator 30B with screws, but first radiator fins 202b may be bonded to disc 31 of rotator 30B with an adhesive member. In this case, the width of first radiator fins 202a may be identical to the width of first radiator fins 202b.

Since metal member 20B includes a plurality of first radiator fins 202, the surface area of metal member 20B increases, and thus heat is more readily dissipated from metal member 20B.

### [Second Through-hole 205]

Second through-hole 205 is a hole through which metal member 20B penetrates in the thickness direction (the z axis direction) of metal member 20B. In the present embodiment, a shaft center that is a motor shaft of rotator 30B passes through and is fitted to second through-hole 205.

### [Openings 206]

Openings 206 are each provided between the plurality of first radiator fins 202 in metal member 20B in a plan view of metal member 20B. More specifically, in the plan view of metal member 20B, openings 206 are each provided between the plurality of first radiator fins 202 in metal member 20B in a region except the circle region including the central axis of metal member 20B and the outer ring region of metal member 20B. In other words, as illustrated in FIG. 19, for example, openings 206 are each provided between the plurality of first radiator fins 202 in metal member 20B except second through-hole 205 and main body 201.

Metal member 20B includes the plurality of openings 206, thereby enabling air currents generated when fluorescent substrate 10B, etc. is rotated by rotator 30B to flow from the z-axis positive side (the third principal surface 11 side) to the z-axis negative side (the fourth principal surface 12 side)of fluorescent substrate 10B.

Note that, as the area of openings 206 in metal member 20B increases in the plan view of metal member 20B, the heat generated in fluorescent substrate 10B due to being irradiated with excitation light L1 is more readily cooled. In view of the above, the width of the plurality of first radiator fins 202 is narrowed and the annular ring-shaped region of main body 201 is narrowed within the permissible strength range of metal member 20B depending on the product to which phosphor wheel 1B is applied, thereby maximizing the above-described area of openings 206.

### [Rotator 30B]

Rotator 30B includes disc 31 and a rotation shaft having a center along axis B1. Rotator 30B rotates fluorescent substrate 10B and metal member 20B about axis B1 (central axis) extending in the thickness direction of fluorescent substrate 10B. Rotator 30B is disposed at the position to overlap fluorescent substrate 10B in a plan view, and bonded to metal member 20B. Rotator 30B is, for example, an outer rotor motor, but is not limited to this example. Rotator 30B is controlled by an electronic circuit (not illustrated), thereby rotary driving fluorescent substrate 10B and metal member 20B.

In the present embodiment, the shaft center that is the motor shaft of rotator 30B is fitted to second through-hole 205 of metal member 20B.

### [Advantageous Effects, Etc.]

As described above, phosphor wheel 1B according to the present embodiment is a phosphor wheel that is transmissive. Phosphor wheel 1B includes fluorescent substrate 10B that includes a fluorescent material and metal member 20B bonded to third principal surface 11 that fluorescent substrate 10B includes. Metal member 20B includes a plurality of first radiator fins 202 that protrude in the direction away from third principal surface 11. In addition, phosphor wheel 1B includes rotator 30B that rotates fluorescent substrate 10B and metal member 20B about an axis extending in a thickness direction of fluorescent substrate 10B. In a plan view of fluorescent substrate 10B, fluorescent substrate 10B includes annular ring-shaped region A11 that does not overlap metal member 20B. In addition, in a plan view of metal member 20B, phosphor wheel 1B is provided with openings 206 each located between the plurality of first radiator fins 202 of metal member 20B.

As described above, in the present embodiment, metal member 20B includes a plurality of openings 206, thereby enabling air currents generated when fluorescent substrate 10B, for example, is rotated by rotator 30B to flow from the z-axis positive side (the third principal surface 11 side) to the z-axis negative side (the fourth principal surface 12 side) of fluorescent substrate 10B. The heat generated in fluorescent substrate 10B due to being irradiated with excitation light L1 is transferred to metal member 20B that is bonded to fluorescent substrate 10B; that is, first radiator fins 202 and main body 201, and metal member 20B is cooled by the air currents that have passed through openings 206. In other words, the heat from fluorescent substrate 10B is more readily dissipated, and thus it is possible to inhibit a rise in temperature of fluorescent substrate 10B due to the irradiation of excitation light L1. As a result, a thermal quenching phenomenon does not readily occur, and thus a decrease in fluorescence can be inhibited.

Here, in phosphor wheel 1B according to the present embodiment, in the plan view of metal member 20B, the plurality of openings are each provided between the plurality of first radiator fins 202 in metal member 20B in a region except the circle region including the central axis of metal member 20B and the outer ring region of metal member 20B. As described above, since the plurality of openings 206 are provided in metal member 20B, it is possible to cause the air currents generated when rotator 30B rotates fluorescent substrate 10B, for example, to flow from the z-axis positive side (the third principal surface 11 side) to the z-axis negative side (the fourth principal surface 12 side).

In addition, in phosphor wheel 1B according to the present embodiment, in the plan view of metal member 20B, the plurality of first radiator fins 202 are arranged radially with respect to a central axis of metal member 20B in a region except a region including the central axis. With this configuration, when rotator 30B rotates fluorescent substrate 10B, for example, it is possible to generate a strong air current with a higher flow velocity. As a result, it is possible to further enhance the heat dissipation property of phosphor wheel 1B; that is, the transmissive fluorescence emitting module.

Next, a result of verification performed on an actual prototype of phosphor wheel 1B according to the present embodiment having a configuration described above will be described.

FIG. 22 is a diagram showing the result of verification performed on the actual prototype of phosphor wheel 1B according to Embodiment 2. FIG. 22 shows, as the result of verification, the rise in temperature of a sintered fluorescent substance (fluorescent substrate 10B) of phosphor wheel 1B according to Embodiment 2 when operated for a predetermined amount of time. Note that, FIG. 22 shows, as Comparison example 1, the result of verification performed on the actual prototype of transmissive fluorescence emitting module 1 according to Embodiment 1.

FIG. 23A is a diagram illustrating metal member 20 used in the actual prototype according to according to Comparison example 1. FIG. 23A illustrates metal member 20 according to Embodiment 1 in which no opening 206 is provided, as the actual prototype according to Comparison example 1. FIG. 23B is a diagram illustrating metal member 20B used in an actual prototype according to Embodiment 2. FIG. 23B illustrates metal member 20B according to the present embodiment in which a plurality of openings 206 are provided, as the actual prototype according to the present embodiment.

FIG. 22, FIG. 23A, and FIG. 23B show that the rise in temperature of the sintered fluorescent substance of phosphor wheel 1B according to Embodiment 2; that is, phosphor wheel 1B including metal member 20B in which the plurality of openings 206 are provided is 171.7 K. Meanwhile, the rise in temperature of the sintered fluorescent substance of transmissive fluorescence emitting module 1 according to Comparison example 1; that is, transmissive fluorescence emitting module 1 including metal member 20 in which no opening 206 is provided is 179.3 K. These results show that the rise in temperature of the sintered fluorescent substance can be inhibited by providing the plurality of openings 206 in metal member 20B.

FIG. 24 is a diagram illustrating another result of verification performed on the actual prototype of phosphor wheel 1B according to Embodiment 2. FIG. 24 illustrates, as the results of verification, the rise in temperature of the sintered fluorescent substance of phosphor wheel 1B according to Embodiment 2 and the rise in temperature of the sintered fluorescent substance of phosphor wheel 1B when the area of openings 206 is extremely reduced by half as Comparison example 2.

FIG. 24 shows that, in phosphor wheel 1B according to Embodiment 2, in the case of Comparison example 2; that is, when the area of the plurality of openings 206 is reduced by half, the rise in temperature of the sintered fluorescent substance is 176.0 K. In other words, when the area of the plurality of openings 206 is extremely reduced by half as in Comparison example 2, the rise in temperature of the sintered fluorescent substance is higher than the rise in temperature (171. 7 K) of the sintered fluorescent substance of phosphor wheel 1B according to Embodiment 2 in which the area of the plurality of openings 206 is large as illustrated in FIG. 23B. Note that, even when the area of the plurality of openings 206 is reduced by half, the rise in temperature of the sintered fluorescent substance is lower than the rise in temperature (179.3 K) of the sintered fluorescent substance of transmissive fluorescence emitting module 1 according to Comparison example 1. In this manner, it is shown that the rise in temperature of the sintered fluorescent substance can be inhibited by providing a plurality of openings 206 with a sufficiently large area in metal member 20B.

Next, a result of analysis of a fluid flow in proximity to openings 206 provided in metal member 20B according to Embodiment 2 is to be described.

FIG. 25 is a diagram illustrating a cut surface used in the analysis of metal member 20B according to Embodiment 2. FIG. 26 is a diagram illustrating the result of analysis of a fluid flow in proximity to openings 206 of metal member 20B according to Embodiment 2. FIG. 26 illustrates a cut surface of metal member 20B taken along line XI-XI of FIG. 25, and the fluid flow in proximity to opening 206 in the cut surface in flow lines.

Openings 206 are each provided between the plurality of first radiator fins 202 in metal member 20B except second through-hole 205 and main body 201. The fluid flow illustrated in FIG. 26 shows that opening 206 is capable of causing the air currents generated when rotator 30B rotates fluorescent substrate 10B, for example, to flow from the z-axis positive side to the z-axis negative side. In addition, the fluid flow illustrated in FIG. 26 shows that a convection flow is generated in proximity to first radiator fin 202 and the annular ring-shaped region of main body 201. Note that, when opening 206 cannot be provided in metal member 20B, the air currents cannot be caused to flow from the z-axis positive side to the z-axis negative side of fluorescent substrate 10B. Accordingly, generation of the above-described convection flow is not facilitated. Accordingly, by providing a plurality of openings 206 in metal member 20B, air passes through opening 206 without fail, and it is possible to generate the flow of air in proximity to first radiator fins 202 and the annular ring-shaped region of main body 201. As a result, generation of the convection flow in proximity to first radiator fins 202 and main body 201 is facilitated. In this manner, first radiator fin 202 and main body 201 can be cooled, and thus it is possible to cool the heat generated in fluorescent substrate 10B due to being irradiated with excitation light L1 and transferred to first radiator fins 202 and main body 201. As a result, it can be considered that the heat from fluorescent substrate 10B is readily dissipated; that is, the heat dissipation property of fluorescent substrate 10B is enhanced, and thus it is possible to inhibit a rise in temperature of fluorescent substrate 10B due to being irradiated with excitation light L1.

### [Variation]

The above-described Embodiment 2 has explained that the plurality of first radiator fins 202 are arranged to spread at equal intervals and extend radially. However, the present disclosure is not limited to this configuration. As illustrated in FIG. 27, a plurality of first radiator fins 202D having a multiblade fan shape may be provided.

FIG. 27 is a perspective view of metal member 20B viewed from the z-axis negative side according to a variation of Embodiment 2. FIG. 28 is a diagram for explaining the conditions of the shape of first radiator fin 202D illustrated in FIG. 27. Note that the same reference sign is given to structural components that are substantially same as those in FIG. 19, for example, and detailed description thereof will be omitted.

Metal member 20D illustrated in FIG. 27 differs from metal member 20B illustrated in FIG. 19, for example, in shape of the plurality of first radiator fins 202D. Other than that, metal member 20D illustrated in FIG. 27 is same as metal member 20B described in Embodiment 2.

More specifically, in a plan view of metal member 20B, the plurality of first radiator fins 202D are each provided in an arc shape that curves in the direction of rotation of metal member 20B in a region except a region including the central axis of metal member 20B. In the present embodiment, the plurality of first radiator fins 202D are arranged in the shape of a multiblade fan in a region except second through-hole 205 on the z-axis negative side of metal member 20B. It is sufficient if the plurality of first radiator fins 202D are each formed to have a shape in which, when the direction of rotation is ω, angle β indicated in FIG. 28 is larger than 90 degrees; that is, angle β formed by the line extending from first radiator fin 202D and the tangent line of metal member 20B is larger than 90 degrees.

Note that, among the plurality of first radiator fins 202D, first radiator fin 202D for use in bonding to disc 31 of rotator 30B with a screw may have a width wider than the width of other first radiator fins 202D. Other details, such as the direction in which the plurality of first radiator fins 202D protrude, are equivalent to those for the plurality of first radiator fins 202 described above, and thus are omitted from the description.

With such a configuration as described above, it is possible to generate a strong air currents (flow of air) with higher velocity when rotator 30B rotates fluorescent substrate 10B, for instance, which can further enhance the heat dissipation property of phosphor wheel 1B; that is, the transmissive fluorescence emitting module.

### [Embodiment 3]

In Embodiment 3, a transmissive fluorescence emitting module; that is, a phosphor wheel with a higher heat dissipation property than that of Embodiment 2 is to be described. The following focuses on the points that differ from metal member 20B described in Embodiment 2.

A transmissive fluorescence emitting module; that is, a phosphor wheel according to the present embodiment has the configuration same as the configuration of phosphor wheel 1B according to Embodiment 2, other than that metal member 20C is included in place of metal member 20B.

In other words, the phosphor wheel according to the present embodiment includes fluorescent substrate 10B, metal member 20C, and rotator 30B. Note that the same reference sign is given to elements that are substantially same as those in Embodiments 1 and 2, and detailed description thereof will be omitted.

### [Metal member 20C]

FIG. 29 is a perspective view of metal member 20C viewed from a z-axis negative side according to Embodiment 3. FIG. 30 is a perspective view of metal member 20C viewed from a z-axis positive side according to Embodiment 3.

Metal member 20C illustrated in FIG. 29 and FIG. 30 mainly differs from metal member 20B illustrated in FIG. 19 and FIG. 20 in that main body 201C is included in place of main body 201 and that a plurality of second radiator fins 207 are further included.

Metal member 20C is bonded to third principal surface 11 of fluorescent substrate 10B. Metal member 20C includes main body 201C, a plurality of first radiator fins 202, a plurality of second radiator fins 207, a second through-hole 205, and a plurality of openings 206. In the present embodiment as well, metal member 20C is located on the z-axis negative side with respect to fluorescent substrate 10B, and is bonded to third principal surface 11 (not illustrated). Note that the material, etc. of metal member 20C are equivalent to those of Embodiment 1, and thus are omitted from the description.

### [Main body 201C]

Main body 201C has the same configuration as that of main body 201 according to Embodiment 2 other than that the dimensions are different. The external dimensions of main body 201C are larger than the external dimensions of main body 201. Main body 201C has a configuration as described below.

Main body 201C is a plate-shaped member, and is fitted to fluorescent substrate 10B. Main body 201C has a circular shape. More specifically, main body 201C has an annular ring shape. The outside diameter of main body 201C is smaller than the outside diameter of fluorescent substrate 10B, and larger than the inside diameter of fluorescent substrate 10B. The outside diameter of main body 201C is 38 mm, for example, but is not limited to this example. The outside diameter of main body 201C may be in a range from 17 mm to 48 mm, and the maximum value thereof is sufficient if it is less than or equal to the value at which annular ring-shaped region A11 of fluorescent substrate 10B can be effectively irradiated with laser light of, for example, approximately 1 mm in diameter. The minimum value may be determined as appropriate in consideration of the rotor shaft diameter of the motor used in rotator 30B and the minimum size at which the opening which will be described later functions effectively. As described above, the external dimensions of main body 201C are larger than the external dimensions of main body 201. As indicated by FIG. 29, in a plan view (i.e., when metal member 20C is viewed in the positive z-axis direction), main body 201C is provided with region A4 in which the plurality of first radiator fins 202 are not provided.

In the plan view, region A4 has an annular ring shape, and corresponds to the region between the two circles indicated by dash-dot lines. In other words, region A4 corresponds to the region between inner circumference 209 and outer circumference 210 in the plan view. Inner circumference 209 is closer to center point C1 than outer circumference 210 is in the plan view. The center of the annular ring shape that is the shape of region A4 overlaps center point C1 of fluorescent substrate 10B in the plan view, and the respective centers of inner circumference 209 and outer circumference 210 also overlap center point C1 in the plan view.

The thickness of main body 201C is approximately 3 mm, for example, but is not limited to this example. The upper limit thereof is sufficient if it is determined appropriately so that the load on the motor used in rotator 30B during rotation does not exceed the tolerance of that motor.

In the present embodiment, main body 201C includes, as with Embodiment 2, step region 201a and fit region 201b on the z-axis positive side as illustrated in FIG. 30.

Step region 201a of main body 201C is bonded to the region in proximity to the inner circumferential edge of annular ring-shaped region A11 of fluorescent substrate 10B with an adhesive member, and the surface of fit region 201b protrudes from fluorescent substrate 10B in the z-axis direction. As a result, metal member 20C is fitted to fluorescent substrate 10B.

### [First Radiator Fin 202]

In the plan view of metal member 20C, the plurality of first radiator fins 202 are arranged radially with respect to a central axis (center point C1) of metal member 20C in a region except a region including the central axis. In the present embodiment, the plurality of first radiator fins 202 extend radially with respect to center point C1 and spread at equal intervals in the plan view in the region except second through-hole 205 on the z-axis negative side of metal member 20C. In other words, in the plan view, the plurality of first radiator fins 202 each extend in the direction from axis B1 (center point C1) that is the central axis toward the outer edge of main body 201C. The outer edge of main body 201C is the outer circumference of main body 201C having a circular shape, specifically, an annular ring shape. Note that, in the present embodiment, the outer circumference of main body 201C having a circular shape matches outer circumference 210 of region A4. In addition, each of the plurality of first radiator fins 202 extends toward the outer edge of main body 201C, but does not reach the outer edge of main body 201C (i.e., outer circumference 210). Each of the plurality of first radiator fins 202 extends toward the outer edge of main body 201C to inner circumference 209 of annular ring-shape region A4.

In addition, the plurality of first radiator fins 202 are arranged to protrude in the direction away from third principal surface 11 (not illustrated) in metal member 20C. In other words, the plurality of first radiator fins 202 are erected to protrude in the negative z-axis direction. The plurality of first radiator fins 202 have the same thickness t₃. FIG. 31 is a side view of metal member 20C according to the present embodiment. Thickness t₃ is the height of first radiator fin 202 in the z-axis direction. Thickness t₃ of the plurality of first radiator fins 202 may be different for different first radiator fins 202.

In the present embodiment, as with metal member 20B according to Embodiment 2, the plurality of first radiator fins 202 have two different widths. Among the plurality of first radiator fins 202, the width of first radiator fin 202a is narrower than the width of first radiator fin 202b.

Since metal member 20C includes the plurality of first radiator fins 202, the surface area of metal member 20C is increased. As a result, heat is more readily dissipated from metal member 20C.

### [Second Radiator Fin 207]

In the plan view of metal member 20C, the plurality of second radiator fins 207 are arranged radially with respect to a central axis (center point C1) of metal member 20C in a region except a region including the central axis. In the present embodiment, the plurality of second radiator fins 207 extend radially with respect to center point C1 and spread at equal intervals in the plan view in the region except second through-hole 205 on the z-axis negative side of metal member 20C.

In addition, the plurality of second radiator fins 207 are arranged to protrude in the direction opposite the direction in which the plurality of first radiator fins 202 protrude, in metal member 20C. In other words, the plurality of second radiator fins 207 are erected to protrude in the positive z-axis direction. In other words, the plurality of second radiator fins 207 are erected to protrude in the direction (the positive z-axis direction) from fourth principal surface 12 to third principal surface 11 of the two principal surfaces that fluorescent substrate 10B includes.

The plurality of second radiator fins 207 have the same thickness t₄. As illustrated in FIG. 31, thickness t₄ is the height of second radiator fin 207 in the z-axis direction. Thickness t₄ of the plurality of second radiator fins 207 may be different for different second radiator fins 207. Thickness t₄ is smaller than thickness t₃, but is not limited to this example. Thickness t₄ may be greater than thickness t₃.

One second radiator fin 207 is located at the position to overlap one first radiator fin 202 in the plan view. The same holds true for the other second radiator fins 207 than the one second radiator fin 207. Here, in the plan view, the plurality of second radiator fins 207 are each located to overlap the position of a corresponding one of the plurality of first radiator fins 202a. Note that three second radiator fins 207 may be further provided to be each located to overlap the position of a corresponding one of three first radiator fins 202b.

The plurality of second radiator fins 207 illustrated in FIG. 30 are same in width which is the same as the width of first radiator fin 202a.

Since metal member 20C further includes the plurality of second radiator fins 207, the surface area of metal member 20C is increased. As a result, heat is more readily dissipated from metal member 20C.

### [Second Through-hole 205]

Second through-hole 205 is a hole through which metal member 20C penetrates in the thickness direction (the z axis direction) of metal member 20C. In the present embodiment, a shaft center that is a motor shaft of rotator 30B passes through and is fitted to second through-hole 205.

### [Opening 206]

Openings 206 are each provided between the plurality of first radiator fins 202 in metal member 20C in a plan view of metal member 20C. Stated differently, openings 206 are each provided between the plurality of second radiator fins 207 in metal member 20C in the plan view of metal member 20C. More specifically, in the plan view of metal member 20C, openings 206 are each provided between the plurality of first radiator fins 202 in metal member 20C that is between the plurality of second radiator fins 207 in a region except the circle region including the central axis of metal member 20C and the outer ring region of metal member 20C. In other words, as illustrated in FIG. 30, for example, openings 206 are each provided between the plurality of first radiator fins 202 in metal member 20C in a region except second through-hole 205 and main body 201C. In the same manner, openings 206 are each provided between the plurality of second radiator fins 207 in metal member 20C except second through-hole 205 and main body 201C.

### [Advantageous Effects, Etc.]

As described above, in the present embodiment, the plurality of second radiator fins 207 are arranged to protrude in the direction opposite the direction in which the plurality of first radiator fins 202 protrude, in metal member 20C.

With this configuration, since metal member 20C includes the plurality of second radiator fins 207, the surface area of metal member 20C is increased. As a result, heat is more readily dissipated from metal member 20C. In other words, the heat from fluorescent substrate 10B is more readily dissipated, and thus it is possible to inhibit a rise in temperature of fluorescent substrate 10B due to the irradiation of excitation light L1. As a result, a thermal quenching phenomenon does not readily occur, and thus a decrease in fluorescence can be reduced.

### (Other Embodiments)

The above has described, for instance, a phosphor wheel according to the present invention, based on the embodiments and variations, but the present invention is not limited to the embodiment and variations. The scope of the present invention includes embodiments resulting from applying various modifications, which may be conceived by those skilled in the art, to the embodiment and the variations, and other embodiments constructed by combining some structural components in the embodiment and the variations, without departing from the gist of the present invention.

It should be understood that, for example, the embodiments and variations described above are mere examples, and thus various changes, additions, omissions, and so on, can be carried out.

In addition, for example, the aspect implemented by arbitrarily combining the structural components and functions stated in the above-described embodiments and variations are also included in the scope of the present disclosure. Those skilled in the art will readily appreciate that various modifications may be made in the embodiments and the variations of the embodiments described above, and that other embodiments may be obtained by arbitrarily combining the structural components and functions of the embodiment and the variation of the embodiment without materially departing from the novel teachings and advantages of the present disclosure. Accordingly, all such modifications and other embodiments are included in the present disclosure. In addition, for example, each of the structural components described in the foregoing embodiments and variations may be combined into a new embodiment.

In addition, the structural components described in the attached Drawings and the detailed descriptions may include not only the structural components which are essential for solving the problems but also the structural components which are not essential for solving the problems but used for exemplifying the above-described techniques. As such, description of these non-essential structural components in the accompanying drawings and the detailed description should not be taken to mean that these non-essential structural components are essential.

### [Reference Signs List]

- 1B: phosphor wheel
- 10B: fluorescent substrate
- 11: third principal surface
- 20B: metal member
- 201: main body
- 30B: rotator
- 202: first radiator fin
- 206: opening
- 207: second radiator fin
- A11: annular ring-shaped region
- L1: excitation light

## Claims

1. A phosphor wheel that is transmissive comprising:
a fluorescent substrate that includes a fluorescent material;
a metal member bonded to a principal surface that the fluorescent substrate includes, the metal member including a plurality of first radiator fins that protrude in a direction away from the principal surface; and
a rotator that rotates the fluorescent substrate and the metal member about an axis extending in a thickness direction of the fluorescent substrate, wherein
in a plan view of the fluorescent substrate, the fluorescent substrate includes a region that does not overlap the metal member, the region being annular ring-shaped, and
in a plan view of the metal member, an opening is provided between the plurality of first radiator fins of the metal member.

2. The phosphor wheel according to claim 1, wherein
in the plan view of the metal member, the plurality of first radiator fins are arranged radially with respect to a central axis of the metal member in a region except a region including the central axis.

3. The phosphor wheel according to claim 1, wherein
in the plan view of the metal member, the plurality of first radiator fins are each provided in an arc shape that curves in a direction of rotation of the metal member in a region except a region including a central axis of the metal member.

4. The phosphor wheel according to claim 1, wherein
the metal member includes a plurality of second radiator fins that protrude in a direction opposite the direction in which the plurality of first radiator fins protrude.

5. The phosphor wheel according to any one of claims 1 to 4, wherein
in the plan view of the metal member, the opening is provided between the plurality of first radiator fins of the metal member in a region except a circle region including a central axis of the metal member and an outer ring region of the metal member.

6. A light emitting device comprising:
the phosphor wheel according to claim 5.

## Amended claims

### Amended claims under Art. 19.1 PCT

1. (Currently Amended) A phosphor wheel that is transmissive comprising:
a fluorescent substrate that consists essentially of a fluorescent material;
a metal member bonded to a principal surface that the fluorescent substrate includes, the metal member including a plurality of first radiator fins that protrude in a direction away from the principal surface; and
a rotator that rotates the fluorescent substrate and the metal member about an axis extending in a thickness direction of the fluorescent substrate, wherein
in a plan view of the fluorescent substrate, the fluorescent substrate includes a region that does not overlap the metal member, the region being annular ring-shaped, and
in a plan view of the metal member, an opening is provided between the plurality of first radiator fins of the metal member.

2. The phosphor wheel according to claim 1, wherein
in the plan view of the metal member, the plurality of first radiator fins are arranged radially with respect to a central axis of the metal member in a region except a region including the central axis.

3. The phosphor wheel according to claim 1, wherein
in the plan view of the metal member, the plurality of first radiator fins are each provided in an arc shape that curves in a direction of rotation of the metal member in a region except a region including a central axis of the metal member.

4. The phosphor wheel according to claim 1, wherein
the metal member includes a plurality of second radiator fins that protrude in a direction opposite the direction in which the plurality of first radiator fins protrude.

5. The phosphor wheel according to any one of claims 1 to 4, wherein
in the plan view of the metal member, the opening is provided between the plurality of first radiator fins of the metal member in a region except a circle region including a central axis of the metal member and an outer ring region of the metal member.

6. A light emitting device comprising:
the phosphor wheel according to claim 5.
